# EUROPEAN PATENT APPLICATION

(11) **EP 4 831 901 A1**
(43) Date of publication of application: **28.10.2026**
(21) Application number: 26174107.8
(22) Date of filing: 22.04.2026
(51) Int. Cl.: G06Q 50/02, G06F 3/04847

(54) **CUSTOMIZABLE PARAMETER DISPLAY FOR REAL-TIME MONITORING OF AGRICULTURAL MACHINES**

(30) Priority: 24.04.2025 US 202519188483
(71) Applicant: CNH Industrial America LLC, New Holland, PA 17557 (US)
(72) Inventor: Halverson, Cole, New Holland, 17557 (US); Miller, Ryan, New Holland, 17557 (US); Padilla, Cassandra, New Holland, 17557 (US)
(74) Representative: CNH Industrial IP Department

(57) **Abstract**

Systems, methods, and computer-readable storage media for monitoring customizable parameters of agricultural machines. One system includes one or more processors configured to receive telematics data for an agricultural machine. The one or more processors configured to, responsive to a selection of the at least one agricultural machine via a graphical user interface (GUI), cause a display of a first set of parameters in a static field of the GUI and a second set of parameters available for customization in a dynamic field of the GUI. The one or more processors configured to, responsive to an interaction with the second set of parameters, cause the GUI to update a configuration in the dynamic field in accordance with the interaction. The one or more processors configured to cause the GUI to display an alert based on a parameter of the first or second set of parameters satisfying a corresponding operational threshold.

## Description

### BACKGROUND

The present disclosure relates generally to machines. More specifically, the present disclosure relates to monitoring machines with agricultural applications.

### SUMMARY

In some embodiments, systems, methods, and computer-readable storage media are disclosed for customizing and monitoring parameters associated with agricultural machines. For example, a graphical user interface (GUI) accessible via a mobile interface can present a map-based view with graphical elements representing one or more agricultural machines operating in the field. Each agricultural machine can include a vehicle (e.g., tractor, sprayer, combine, etc.) and/or equipment configured to transmit telemetry data (e.g., ground speed, fuel level, DEF level, engine load, and other operational parameters) for display via the GUI, and the parameters can be updated in real-time based on the telemetry data. In response to a user selection of a particular machine from the map view, the GUI can present a parameter display with one or more fixed (e.g., static) fields and one or more dynamic (e.g., customizable) fields. The fixed fields can include a first set of parameters that remain static across machines, and the dynamic fields can include a second set of parameters that are customizable (e.g., by a user). In response to an interaction with the customizable parameters (e.g., dragging, reordering, removing, selecting, etc.), the GUI can update the display of the dynamic parameters based on the interaction, and the updated configuration can be applied to the selected machine or to multiple machines of a shared machine type. In addition, the GUI can provide or display visual alerts when one or more parameters satisfy a corresponding operational threshold (e.g., fuel level falls below 25%).

In some embodiments, the techniques described herein relate to a system for monitoring customizable parameters of agricultural machines, the system including one or more processors configured to receive telematics data for at least one agricultural machine, responsive at least in part to a selection of the at least one agricultural machine via a graphical user interface (GUI), cause a display of a first set of parameters in at least one static field of the GUI and a second set of parameters available for customization in at least one dynamic field of the GUI, the first set of parameters and the second set of parameters based at least in part on the telematics data for the at least one agricultural machine, responsive at least in part to an interaction with the second set of parameters via the GUI, cause the GUI to update a configuration of the second set of parameters in the at least one dynamic field in accordance with the interaction, and cause the GUI to display an alert based on at least one parameter of the first set of parameters or the second set of parameters satisfying a corresponding operational threshold.

In some embodiments, the techniques described herein relate to a system, wherein the first set of parameters and the second set of parameters are updated in real-time based on the telematics data for the at least one agricultural machine, and the one or more processors are further configured to transmit a control signal to remotely disable the at least one agricultural machine in response to the alert.

In some embodiments, the techniques described herein relate to a system, the one or more processors further configured to cause, via the GUI, a display of a prompt including at least one selectable element for applying the configuration of the second set of parameters to respective second sets of parameters of a plurality of agricultural machines having a machine type that matches a machine type of the at least one agricultural machine, wherein the configuration is based on the interaction with the second set of parameters, and responsive at least in part to receiving a selection of the at least one selectable element, update the respective second sets of parameters for one or more of the plurality of agricultural machines based on the configuration.

In some embodiments, the techniques described herein relate to a system, the one or more processors further configured to, responsive at least in part to receiving a request to reset the second set of parameters, restore a default configuration of the second set of parameters based on a machine type of the at least one agricultural machine.

In some embodiments, the techniques described herein relate to a system, wherein the default configuration is restored for at least one of the at least one agricultural machine selected via the GUI, or a plurality of agricultural machines having a machine type that matches the machine type of the at least one agricultural machine.

In some embodiments, the techniques described herein relate to a system, wherein the interaction with the second set of parameters includes a reordering of one or more of the second set of parameters, and the one or more processors further configured to update a visual arrangement of the display of the second set of parameters in the at least one dynamic field based on the reordering.

In some embodiments, the techniques described herein relate to a system, the one or more processors further configured to generate a machine-specific graphical representation of the at least one agricultural machine, cause a display of the machine-specific graphical representation via the GUI, and render each of one or more parameters from the second set of parameters at a corresponding physical location on the machine-specific graphical representation that visually corresponds to a component of the at least one agricultural machine associated with each of the one or more parameters.

In some embodiments, the techniques described herein relate to a system, the one or more processors further configured to generate, for display via the GUI, a visual indicator in association with the at least one parameter of the first set of parameters or the second set of parameters, the visual indicator including a color-coded state representing whether a current value of the at least one parameter satisfies the corresponding operational threshold.

In some embodiments, the techniques described herein relate to a system, wherein the GUI includes a mobile interface accessible via a mobile application installed on a user device, and the one or more processors further configured to load a default configuration of the second set of parameters for the at least one agricultural machine, determine the interaction with the second set of parameters corresponds to an initial interaction, and responsive at least in part to the initial interaction, cause, via the mobile interface, a display of an instructional interface including one or more instructional elements configured to guide customization of the second set of parameters.

In some embodiments, the techniques described herein relate to a system, the one or more processors further configured to cause the GUI to display a first section including one or more parameters of the second set of parameters in visual proximity to the first set of parameters, and cause the GUI to display a second section including one or more additional parameters from the second set of parameters, the second section arranged separately from the first section within the GUI.

In some embodiments, the techniques described herein relate to a computer-implemented method including receiving, by one or more processors, telematics data for at least one agricultural machine, responsive at least in part to a selection of the at least one agricultural machine via a graphical user interface (GUI), causing, by the one or more processors, a display of a first set of parameters in at least one static field of the GUI and a second set of parameters available for customization in at least one dynamic field of the GUI, the first set of parameters and the second set of parameters based at least in part on the telematics data for the at least one agricultural machine, responsive at least in part to an interaction with the second set of parameters via the GUI, causing, by the one or more processors, the GUI to update a configuration of the second set of parameters in the at least one dynamic field in accordance with the interaction, and causing, by the one or more processors, the GUI to display an alert based on at least one parameter of the first set of parameters or the second set of parameters satisfying a corresponding operational threshold.

In some embodiments, the techniques described herein relate to a computer-implemented method, wherein the first set of parameters and the second set of parameters are updated in real-time based on the telematics data for the at least one agricultural machine, and the method further including transmitting, by the one or more processors, a control signal to remotely disable the at least one agricultural machine in response to the alert.

In some embodiments, the techniques described herein relate to a computer-implemented method, further including causing, by the one or more processors, via the GUI, a display of a prompt including at least one selectable element for applying the configuration of the second set of parameters to respective second sets of parameters of a plurality of agricultural machines having a machine type that matches a machine type of the at least one agricultural machine, wherein the configuration is based on the interaction with the second set of parameters, and responsive at least in part to receiving a selection of the at least one selectable element, updating, by the one or more processors, the respective second sets of parameters for one or more of the plurality of agricultural machines based on the configuration.

In some embodiments, the techniques described herein relate to a computer-implemented method, further including responsive at least in part to receiving a request to reset the second set of parameters, restoring, by the one or more processors, a default configuration of the second set of parameters based on a machine type of the at least one agricultural machine.

In some embodiments, the techniques described herein relate to a computer-implemented method, wherein the default configuration is restored for at least one of the at least one agricultural machine selected via the GUI, or a plurality of agricultural machines having a machine type that matches the machine type of the at least one agricultural machine.

In some embodiments, the techniques described herein relate to a computer-implemented method, wherein the interaction with the second set of parameters includes a reordering of one or more of the second set of parameters, and the method further including updating, by the one or more processors, a visual arrangement of the display of the second set of parameters in the at least one dynamic field based on the reordering.

In some embodiments, the techniques described herein relate to a computer-implemented method, further including generating, by the one or more processors, a machine-specific graphical representation of the at least one agricultural machine, causing, by the one or more processors, a display of the machine-specific graphical representation via the GUI, and rendering, by the one or more processors, each of one or more parameters from the second set of parameters at a corresponding physical location on the machine-specific graphical representation that visually corresponds to a component of the at least one agricultural machine associated with each of the one or more parameters.

In some embodiments, the techniques described herein relate to a computer-implemented method, further including generating, by the one or more processors, for display via the GUI, a visual indicator in association with the at least one parameter of the first set of parameters or the second set of parameters, the visual indicator including a color-coded state representing whether a current value of the at least one parameter satisfies the corresponding operational threshold.

In some embodiments, the techniques described herein relate to a computer-implemented method, wherein the GUI includes a mobile interface accessible via a mobile application installed on a user device, and the method further including loading, by the one or more processors, a default configuration of the second set of parameters for the at least one agricultural machine, determining, by the one or more processors, the interaction with the second set of parameters corresponds to an initial interaction, and responsive at least in part to the initial interaction, causing, by the one or more processors, via the mobile interface, a display of an instructional interface including one or more instructional elements configured to guide customization of the second set of parameters.

In some embodiments, the techniques described herein relate to a non-transitory computer-readable storage media (CRM) for monitoring customizable parameters of agricultural machines, the non-transitory CRM having instructions stored thereon and executable by one or more processors to receive telematics data for at least one agricultural machine, responsive at least in part to a selection of the at least one agricultural machine via a graphical user interface (GUI), cause a display of a first set of parameters in at least one static field of the GUI and a second set of parameters available for customization in at least one dynamic field of the GUI, the first set of parameters and the second set of parameters based at least in part on the telematics data for the at least one agricultural machine, responsive at least in part to an interaction with the second set of parameters via the GUI, cause the GUI to update a configuration of the second set of parameters in the at least one dynamic field in accordance with the interaction, and cause the GUI to display an alert based on at least one parameter of the first set of parameters or the second set of parameters satisfying a corresponding operational threshold.

### BRIEF DESCRIPTION OF THE DRAWINGS

FIG. 1 is a perspective view of a vehicle, according to an exemplary embodiment.
FIG. 2 is a schematic block diagram of the vehicle of FIG. 1, according to an exemplary embodiment.
FIG. 3 is a schematic block diagram of a driveline of the vehicle of FIG. 1, according to an exemplary embodiment.
FIGS. 4 is a block diagram of a system for parameter customization, according to an exemplary embodiment.
FIGS. 5A-5H are illustrations of graphical user interfaces for parameter customization, according to an exemplary embodiment.
FIG. 6 is an illustration of a graphical user interface for parameter customization including a machine-specific graphical representation, according to an exemplary embodiment.
FIG. 7 is a flowchart of a process for parameter customization, according to an exemplary embodiment.

### DETAILED DESCRIPTION

Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

Agricultural machines, such as tractors, sprayers, and combines, can generate telematics data or telemetry data during operation. For example, a machine can include onboard sensors that transmit telematics data associated with the operation of the machine, which can be used to determine parameters such as ground speed, fuel level, DEF level, engine load, fluid temperatures, and other operational metrics or measurements associated with a particular machine. That is, telematics data can provide a live operational state of the machine and can be used to assess machine performance. However, integrating telematics data into a graphical user interface (GUI) in a computationally efficient and customizable manner presents several challenges.

Some telemetry displays use rigid layouts with unmodifiable parameters. For example, some layouts are generated without reference to the live state of the machine, the task being performed, the relevance of available telemetry values under current conditions, and/or operator preferences or inputs. That is, because layouts are not dynamically constructed based on machine configuration or other attributes, layouts can exclude parameters that indicate performance or developing fault conditions, which can prevent and/or delay downstream operations associated with a particular machine (e.g., addressing a fault, corrective actions, commands, operational adjustments, refueling/repairs, etc.). As a result, parameter display configurations can fail to reflect a current operational context of a particular machine, which can reduce the effectiveness of parameter monitoring and prevent timely responses (e.g., corrective actions, commands, operational adjustments, refueling/repairs, etc.) to equipment breakdowns or failures. That is, if a relevant telemetry parameter is not surfaced in a current view, a developing fault condition can go undetected. However, some telemetry displays use interface logic that cannot prioritize or surface parameter data based on a real-time operational significance or customizable preference, which reduces the effectiveness of parameter-based monitoring and introduces unnecessary computational overhead when unused or irrelevant telemetry values are processed or analyzed but not displayed or acted upon.

Because telemetry display logic does not support dynamic updates to parameter visibility or ordering, some systems cannot adjust a display structure in response to incoming telemetry conditions. For example, if a telemetry parameter indicates a deviation from normal operating range (e.g., engine load exceeding a threshold), the parameter can be received and processed but not rendered within an appropriate view of an interface (e.g., excluded from the fixed layout). As a result, the interface is prevented from surfacing data that would otherwise support early detection of performance degradation or mechanical failure, which causes a disconnect between telemetry evaluation and corresponding visual states of the interface. Further, latency is introduced between the occurrence of a machine-side condition and any feedback or alerts provided via display logic. Because of this operational delay, the usefulness of telemetry data for real-time fault detection is limited, and the time used to transition from data receipt to fault signaling and/or corrective action is increased.

In addition, some display configurations are not associated with persistent machine identifiers or machine-type classifications. As a result, parameter selections or layouts are regenerated frequently without reference to prior configurations, which causes redundant processing operations when machines are re-accessed or when multiple machines of the same type are monitored concurrently. For example, a configuration that has previously surfaced relevant parameters for a given machine type can not be re-used when accessing another machine of the same type, and the interface logic can repeat layout construction steps or revert to generic defaults. This can increase the number of display logic executions and introduce inconsistencies in telemetry presentation across machines operating under similar conditions, which can limit fleet performance and/or effectiveness. Additionally, in environments where interfaces are executed on mobile devices, latency and memory constraints can further reduce the efficiency of layout regeneration or parameter evaluation, particularly when incoming telemetry streams use frequent or intermittent display updates. This reduces the effectiveness of real-time machine monitoring by preventing machine conditions from being surfaced within the telemetry display in time to facilitate corrective action.

In some embodiments, the systems, methods, and computer-readable storage media herein address technical challenges associated with machine parameter monitoring by generating parameters to display operational information associated with agricultural machines on a graphical user interface (GUI), customizing a display of the parameters based on an interaction with the GUI, and generating alerts based on real-time performance or conditions associated the agricultural machines. For example, the systems, methods, and computer-readable storage media herein can address technical challenges associated with parameter visibility, telemetry evaluation, fault correction delays, and interface responsiveness by processing telemetry data for a selected agricultural machine and generating a structured display that distinguishes between fixed (e.g., static) fields and configurable (e.g., dynamic) fields. That is, by determining and presenting a first set of parameters in static display fields, the systems, methods, and computer-readable storage media provide a set of telemetry values (e.g., ground speed, fuel level, DEF level) that remain visible across machine sessions and do not vary based on layout customization, thereby maintaining immediate access to baseline operational context and reducing repeated interface rendering of baseline parameters, which prevents redundant processing operations and decreases latency. Further, the systems, methods, and computer-readable storage media can identify and present a second set of parameters in configurable display fields of the GUI such that the second set of parameters can be prioritized, rearranged, or removed in response to GUI interaction (e.g., based on task, machine type, condition, and/or other attributes). As telemetry values are updated in real time, the systems, methods, and computer-readable storage media can evaluate each value against an associated operational threshold and modify the display state of a corresponding parameter field when a threshold condition is satisfied. Because the second set of parameters is defined in response to interaction and reflects context-specific relevance, the telemetry evaluation is performed on parameters that are more likely to indicate developing faults, performance degradation, or abnormal conditions under current machine usage. By evaluating and surfacing context-relevant parameters in real time, the systems, methods, and computer-readable storage media reduce the time between the detection of a machine condition and the corresponding display update. In some implementations, this reduction in latency improves fault response times and supports faster transitions from telemetry analysis to machine-side actions (e.g., operator adjustments, control commands, or automated fault-handling routines), thereby improving operational performance and reducing the likelihood of unaddressed fault escalation.

In addition, the systems, methods, and computer-readable storage media herein address technical challenges associated with machine parameter monitoring by receiving and applying updates to customizable (e.g., both static and dynamic) telemetry parameters in real-time while maintaining continuity in parameter visibility. For example, the systems, methods, and computer-readable storage media can display customized or static parameter data during navigation between various views or pages of the GUI (e.g., providing parameter display overlaid with a map view), which provides operational context that is useful for fault detection. That is, by maintaining parameter visibility across different display states, the systems, methods, and computer-readable storage media avoid reinitializing layout logic or re-requesting telemetry values when switching views, which reduces interface rendering operations and supports efficient monitoring workflows in mobile or field-based environments. Further, the systems, methods, and computer-readable storage media can associate a parameter configuration with a machine type classification and apply the configuration to multiple agricultural machines having the same type, which prevents redundant layout generation and supports consistency across machines operating under similar conditions. For example, the systems, methods, and computer-readable storage media can associate a layout with a particular machine or machine type such that a parameter configuration can be restored after a session ends and/or based on other conditions (e.g., a command to restore defaults). In some examples, the systems, methods, and computer-readable storage media can determine that a user interaction corresponds to a first-time parameter configuration and cause the GUI to present onboarding guidance for editing or reordering parameter fields, which reduces input errors during initial customization and improves the accuracy of resulting telemetry displays. Additionally, the systems, methods, and computer-readable storage media can transmit a control signal to the corresponding machine based on a threshold condition, such as disabling an engine system, limiting power output, or initiating a shutdown sequence to prevent damage.

### Overall Vehicle

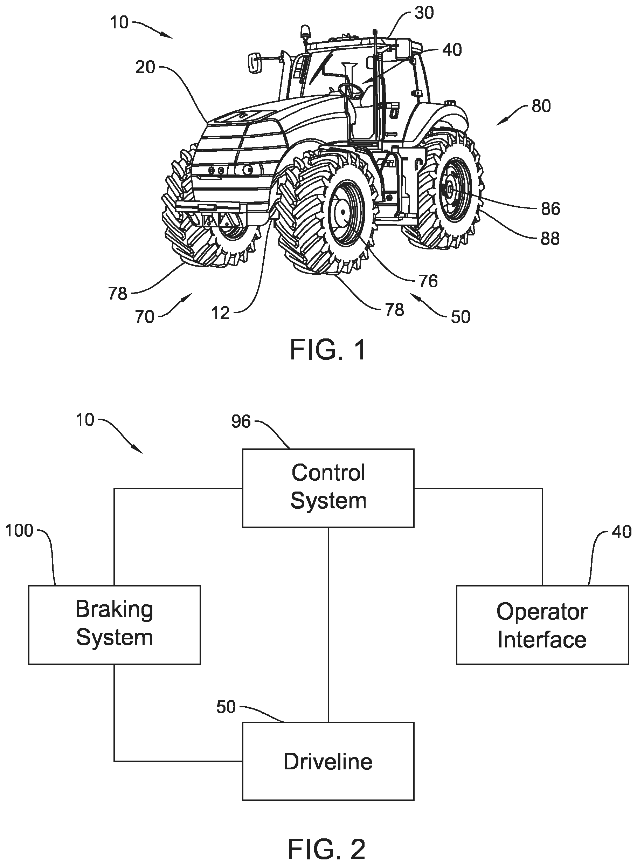

According to the exemplary embodiment shown in FIGS. 1-3, a machine or vehicle (e.g., a non-articulated vehicle, an articulated vehicle, etc.), shown as vehicle 10, includes a chassis, shown as frame 12; a body assembly, shown as body 20, coupled to the frame 12 and having an occupant portion or section, shown as cab 30; operator input and output devices, shown as operator interface 40, that are disposed within the cab 30; a drivetrain, shown as driveline 50, coupled to the frame 12 and at least partially disposed under the body 20; a vehicle braking system, shown as braking system 92, coupled to one or more components of the driveline 50 to facilitate selectively braking the one or more components of the driveline 50; and a vehicle control system, shown as control system 96, coupled to the operator interface 40, the driveline 50, and the braking system 92. In other embodiments, the vehicle 10 includes more or fewer components.

The chassis of the vehicle 10 can include a structural frame (e.g., the frame 12) formed from one or more frame members coupled to one another (e.g., as a weldment). Additionally or alternatively, the chassis can include a portion of the driveline 50. By way of example, a component of the driveline 50 (e.g., the transmission 56) can include a housing of sufficient thickness to provide the component with strength to support other components of the vehicle 10.

According to an exemplary embodiment, the vehicle 10 is an off-road machine or vehicle. In some embodiments, the off-road machine or vehicle is an agricultural machine or vehicle such as a tractor, a telehandler, a front loader, a combine harvester, a grape harvester, a forage harvester, a sprayer vehicle, a speedrower, and/or another type of agricultural machine or vehicle. In some embodiments, the off-road machine or vehicle is a construction machine or vehicle such as a skid steer loader, an excavator, a backhoe loader, a wheel loader, a bulldozer, a telehandler, a motor grader, and/or another type of construction machine or vehicle. In some embodiments, the vehicle 10 includes one or more attached implements and/or trailed implements such as a front mounted mower, a rear mounted mower, a trailed mower, a tedder, a rake, a baler, a plough, a cultivator, a rotavator, a tiller, a harvester, and/or another type of attached implement or trailed implement.

According to an exemplary embodiment, the cab 30 is configured to provide seating for an operator (e.g., a driver, etc.) of the vehicle 10. In some embodiments, the cab 30 is configured to provide seating for one or more passengers of the vehicle 10. According to an exemplary embodiment, the operator interface 40 is configured to provide an operator with the ability to control one or more functions of and/or provide commands to the vehicle 10 and the components thereof (e.g., turn on, turn off, drive, turn, brake, engage various operating modes, raise/lower an implement, etc.). The operator interface 40 can include one or more displays and one or more input devices. The one or more displays can be or include a touchscreen, an LCD display, a LED display, a speedometer, gauges, warning lights, etc. The one or more input device can be or include a steering wheel, a joystick, buttons, switches, knobs, levers, an accelerator pedal, a brake pedal, etc.

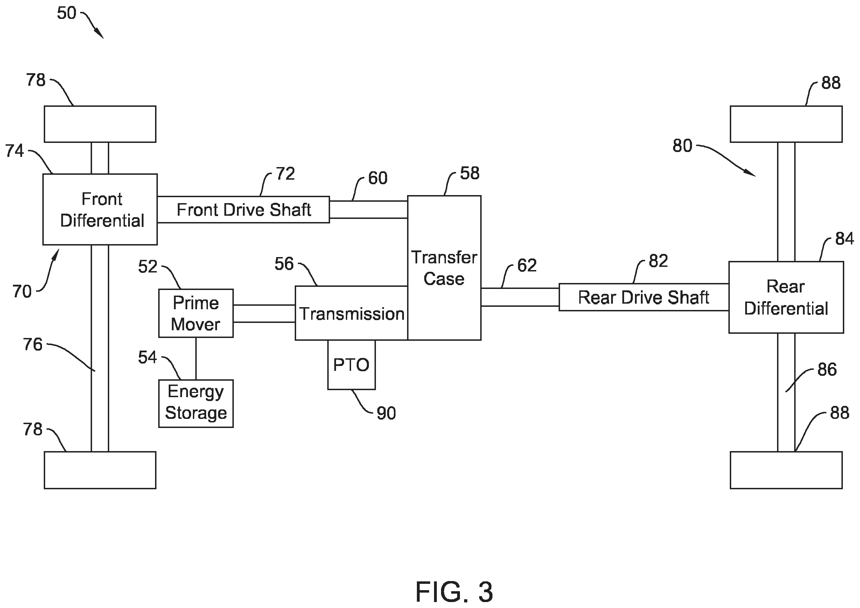

According to an exemplary embodiment, the driveline 50 is configured to propel the vehicle 10. As shown in FIG. 3, the driveline 50 is an electric driveline that includes a primary driver (e.g., prime mover, etc.), shown as electric motor 52, and an energy storage system (e.g., energy storage, etc.), shown as high voltage system 54. For example, the electric motor 52 can be electrically coupled to (e.g., in electrical communication with, etc.) the high voltage system 54 and can consume electrical energy from the high voltage system 54 in order to propel the vehicle 10. In some embodiments, the driveline 50 is a fuel cell electric driveline that includes the electric motor 52 and the energy storage system is a fuel cell (e.g., that stores hydrogen, that produces electricity from the hydrogen, etc.). In some embodiments, the driveline 50 is a hybrid driveline that includes (i) the electric motor 52 and an internal combustion engine and (ii) the high voltage system 54 and a fuel tank. In other embodiments, the driveline 50 is a conventional driveline where the primary driver is an internal combustion engine and the energy storage system is a fuel tank. The internal combustion engine can be a spark-ignition internal combustion engine or a compression-ignition internal combustion engine that can use any suitable fuel type (e.g., diesel, ethanol, gasoline, natural gas, propane, etc.).

As shown in FIG. 3, the driveline 50 includes a transmission device (e.g., a gearbox, a continuous variable transmission ("CVT"), etc.), shown as transmission 56, coupled to the electric motor 52; a power divider, shown as transfer case 58, coupled to the transmission 56; a first tractive assembly, shown as front tractive assembly 70, coupled to a first output of the transfer case 58, shown as front output 60; and a second tractive assembly, shown as rear tractive assembly 80, coupled to a second output of the transfer case 58, shown as rear output 62. According to an exemplary embodiment, the transmission 56 has a variety of configurations (e.g., gear ratios, etc.) and provides different output speeds relative to a mechanical input received thereby from the electric motor 52. In some embodiments (e.g., in electric driveline configurations, in hybrid driveline configurations, etc.), the driveline 50 does not include the transmission 56. In such embodiments, the electric motor 52 can be directly coupled to the transfer case 58. According to an exemplary embodiment, the transfer case 58 is configured to facilitate driving both the front tractive assembly 70 and the rear tractive assembly 80 with the electric motor 52 to facilitate front and rear drive (e.g., an all-wheel-drive vehicle, a four-wheel-drive vehicle, etc.). In some embodiments, the transfer case 58 facilitates selectively engaging rear drive only, front drive only, and both front and rear drive simultaneously. In some embodiments, the transmission 56 and/or the transfer case 58 facilitate selectively disengaging the front tractive assembly 70 and the rear tractive assembly 80 from the electric motor 52 (e.g., to permit free movement of the front tractive assembly 70 and the rear tractive assembly 80 in a neutral mode of operation). In some embodiments, the driveline 50 does not include the transfer case 58. In such embodiments, the electric motor 52 or the transmission 56 can directly drive the front tractive assembly 70 (i.e., a front-wheel-drive vehicle) or the rear tractive assembly 80 (i.e., a rear-wheel-drive vehicle).

As shown in FIGS. 1 and 3, the front tractive assembly 70 includes a first drive shaft, shown as front drive shaft 72, coupled to the front output 60 of the transfer case 58; a first differential, shown as front differential 74, coupled to the front drive shaft 72; a first axle, shown front axle 76, coupled to the front differential 74; and a first pair of tractive elements, shown as front tractive elements 78, coupled to the front axle 76. In some embodiments, the front tractive assembly 70 includes a plurality of front axles 76. In some embodiments, the front tractive assembly 70 does not include the front drive shaft 72 or the front differential 74 (e.g., a rear-wheel-drive vehicle). In some embodiments, the front drive shaft 72 is directly coupled to the transmission 56 (e.g., in a front-wheel-drive vehicle, in embodiments where the driveline 50 does not include the transfer case 58, etc.) or the electric motor 52 (e.g., in a front-wheel-drive vehicle, in embodiments where the driveline 50 does not include the transfer case 58 or the transmission 56, etc.). The front axle 76 can include one or more components.

As shown in FIGS. 1 and 3, the rear tractive assembly 80 includes a second drive shaft, shown as rear drive shaft 82, coupled to the rear output 62 of the transfer case 58; a second differential, shown as rear differential 84, coupled to the rear drive shaft 82; a second axle, shown rear axle 86, coupled to the rear differential 84; and a second pair of tractive elements, shown as rear tractive elements 88, coupled to the rear axle 86. In some embodiments, the rear tractive assembly 80 includes a plurality of rear axles 86. In some embodiments, the rear tractive assembly 80 does not include the rear drive shaft 82 or the rear differential 84 (e.g., a front-wheel-drive vehicle). In some embodiments, the rear drive shaft 82 is directly coupled to the transmission 56 (e.g., in a rear-wheel-drive vehicle, in embodiments where the driveline 50 does not include the transfer case 58, etc.) or the electric motor 52 (e.g., in a rear-wheel-drive vehicle, in embodiments where the driveline 50 does not include the transfer case 58 or the transmission 56, etc.). The rear axle 86 can include one or more components. According to the exemplary embodiment shown in FIG. 1, the front tractive elements 78 and the rear tractive elements 88 are structured as wheels. In other embodiments, the front tractive elements 78 and the rear tractive elements 88 are otherwise structured (e.g., tracks, etc.). In some embodiments, the front tractive elements 78 and the rear tractive elements 88 are both steerable. In other embodiments, only one of the front tractive elements 78 or the rear tractive elements 88 is steerable. In still other embodiments, both the front tractive elements 78 and the rear tractive elements 88 are fixed and not steerable.

In some embodiments, the driveline 50 includes a plurality of the electric motors 52. By way of example, the driveline 50 can include a first of the electric motors 52 that drives the front tractive assembly 70 and a second of the electric motors 52 that drives the rear tractive assembly 80. By way of another example, the driveline 50 can include a first of the electric motors 52 that drives a first one of the front tractive elements 78, a second of the electric motors 52 that drives a second one of the front tractive elements 78, a third of the electric motors 52 that drives a first one of the rear tractive elements 88, and/or a fourth of the electric motors 52 that drives a second one of the rear tractive elements 88. By way of still another example, the driveline 50 can include a first of the electric motors 52 that drives the front tractive assembly 70, a second of the electric motors 52 that drives a first one of the rear tractive elements 88, and a third of the electric motors 52 that drives a second one of the rear tractive elements 88. By way of yet another example, the driveline 50 can include a first of the electric motors 52 that drives the rear tractive assembly 80, a second of the electric motors 52 that drives a first one of the front tractive elements 78, and a third of the electric motors 52 that drives a second one of the front tractive elements 78. In such embodiments, the driveline 50 can not include the transmission 56 and/or the transfer case 58 or can include multiple of the transmissions 56 and/or the transfer cases 58 (e.g., one of the transmissions 56 and/or one of the transfer cases 58 for each of the electric motors 52, etc.).

As shown in FIG. 3, the driveline 50 includes a power-take-off ("PTO"), shown as PTO 90. While the PTO 90 is shown as being an output of the transmission 56, in other embodiments the PTO 90 can be an output of the electric motor 52, the transmission 56, and/or the transfer case 58. According to an exemplary embodiment, the PTO 90 is configured to facilitate driving an attached implement and/or a trailed implement of the vehicle 10. In some embodiments, the driveline 50 includes a PTO clutch positioned to selectively decouple the driveline 50 from the attached implement and/or the trailed implement of the vehicle 10 (e.g., so that the attached implement and/or the trailed implement is only operated when desired, etc.).

According to an exemplary embodiment, the braking system 92 includes one or more brakes (e.g., disc brakes, drum brakes, in-board brakes, axle brakes, etc.) positioned to facilitate selectively braking (i) one or more components of the driveline 50 and/or (ii) one or more components of a trailed implement. In some embodiments, the one or more brakes include (i) one or more front brakes positioned to facilitate braking one or more components of the front tractive assembly 70 and (ii) one or more rear brakes positioned to facilitate braking one or more components of the rear tractive assembly 80. In some embodiments, the one or more brakes include only the one or more front brakes. In some embodiments, the one or more brakes include only the one or more rear brakes. In some embodiments, the one or more front brakes include two front brakes, one positioned to facilitate braking each of the front tractive elements 78. In some embodiments, the one or more front brakes include at least one front brake positioned to facilitate braking the front axle 76. In some embodiments, the one or more rear brakes include two rear brakes, one positioned to facilitate braking each of the rear tractive elements 88. In some embodiments, the one or more rear brakes include at least one rear brake positioned to facilitate braking the rear axle 86. Accordingly, the braking system 92 can include one or more brakes to facilitate braking the front axle 76, the front tractive elements 78, the rear axle 86, and/or the rear tractive elements 88. In some embodiments, the one or more brakes additionally include one or more trailer brakes of a trailed implement attached to the vehicle 10. The trailer brakes are positioned to facilitate selectively braking one or more axles and/or one more tractive elements (e.g., wheels, etc.) of the trailed implement.

### Customizable Parameter Display for Real-Time Monitoring of Agricultural Machines

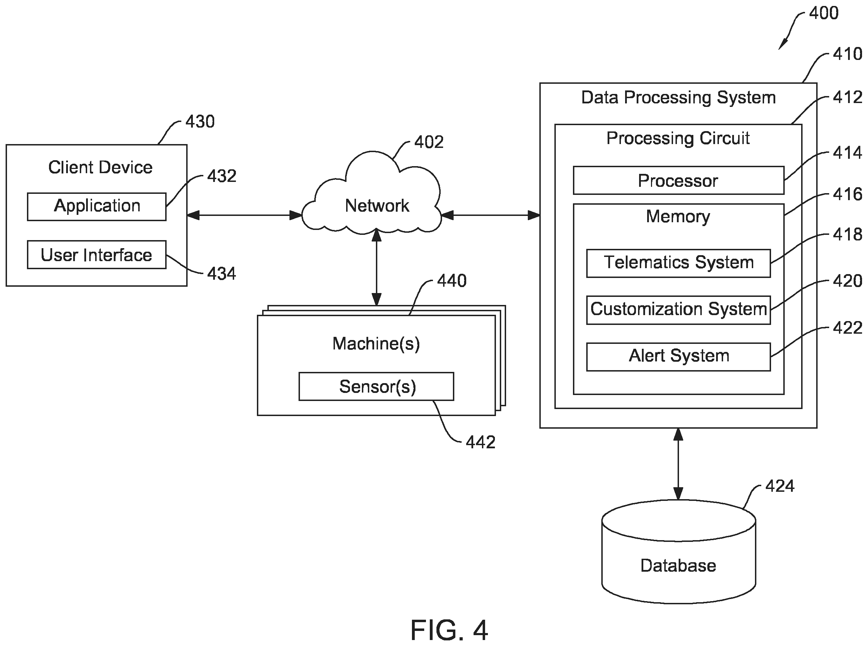

Referring to FIG. 4, a block diagram of a system 400 for parameter customization is shown, according to an exemplary embodiment. The system 400 can include a data processing system 410 configured to communicate with one or more client devices 430 and one or more machines 440 over a network 402. The data processing system 410 can include a processing circuit 412 including a processor 414 and memory 416. In some examples, the data processing system 410 or processing circuit 412 can further include one or more systems or subsystems for executing operations associated with telemetry collection, parameter display configuration, or alert generation. For example, the processing circuit 412 can include a telematics system 418, a customization system 420, and an alert system 422. In some embodiments, the data processing system 410 can include, interface with, or be communicatively coupled with a database 424 configured to store data associated with various elements and/or components of the system 400. The client device 430 can include an application 432 and a user interface 434. The application 432 can provide functionality for displaying telemetry data, receiving parameter configuration inputs, or generating alert displays based on input from the data processing system 410. In some embodiments, the client device 430 can communicate with the data processing system 410 via the network 402 to receive parameter configuration data, display updates, or telemetry alerts. The machines 440 can include one or more sensors 442 configured to generate telematics data (e.g., telemetry data), such as data associated with fuel level, engine load, ground speed, or other parameters of the machines 440.

Although one or more elements and/or components of FIG. 4 can be described in the singular form (e.g., a client device 430, a user interface 434, a machine 440, a sensor 442, etc.), it should be understood that the system 400 can include two or more of any such components (e.g., multiple client devices 430, multiple user interfaces 434, multiple machines 440, multiple sensors 442, etc.). In addition, although elements and/or components of FIG. 4 can be described in the plural form, it should be understood that system 400 can include a single one of any such component (e.g., a single client device 430, a single user interface 434, a single machine 440, a single sensor 442). In some embodiments, at least one (e.g., each) of the components or subsystems of the system 400 (e.g., client device 430, data processing system 410, telematics system 418, customization system 420, alert system 422, etc.) can include one or more processors coupled with memory or software and configured to perform the various processes and tasks described herein, such as receiving telemetry data, generating parameter displays, processing configuration interactions, or triggering alerts. In some embodiments, one or more of the subsystems of the data processing system 410 (e.g., the telematics system 418, customization system 420, or alert system 422) can be implemented locally within the data processing system 410 or remotely in communication therewith over the network 402.

The network 402 can include a wireless or wired connection utilized by components of FIG. 4 (e.g., machines 440, client device 430, data processing system 410, etc.) to store, transmit, receive, or display information (e.g., data associated with parameter customization and telemetry monitoring). The network 402 can facilitate communication between the machines 440, client device 430, and the data processing system 410, including internal subsystems or external components the machines 440, client device 430, and the data processing system 410. The data processing system 410, for example, can receive data from the client device 430 and transmit data to the client device 430 via the network 402. For example, the data processing system 410 can receive parameter configuration selections, interaction data, or operational commands from the client device 430 and transmit telemetry data, alert information, or updated parameter displays in response via the network 402. The network 402 can include a hardwired connection (e.g., copper wire or fiber optics) or a wireless connection (e.g., wide area network (WAN), controller area network (CAN), local area network (LAN), or personal area network (PAN)). For example, the network 402 can support Wi-Fi, Bluetooth, BLE, or other communication protocols for transferring data. In some embodiments, one or more components of FIG. 4 (e.g., client device 430, data processing system 410) can use the network 402 to perform the various processes and tasks described herein, such as receiving telemetry inputs, updating parameter configurations, or generating alerts.

The network 402 can facilitate communications in accordance with various communication protocols such as Transmission Control Protocol and Internet Protocol (TCP/IP), User Datagram Protocol (UDP), or IEEE communication protocols. In one example, the network 402 can include wireless communications according to Bluetooth specification sets, or another standard or proprietary wireless communication protocol. In another example, the network 402 can also include communications over a cellular network, including, e.g., a GSM (Global System for Mobile Communications), CDMA (Code Division Multiple Access), EDGE (Enhanced Data for Global Evolution) network.

The systems or sub-systems described herein with regard to FIG. 4 (e.g., client device 430, data processing system 410, telematics system 418, customization system 420, alert system 422, etc.) can include any combination of hardware and software. For example, client device 430, data processing system 410, telematics system 418, customization system 420, alert system 422, etc. can include any computing device including one or more processors coupled with memory or software and capable of performing the various processes and tasks described herein.

In some implementations, the data processing system 410 can include and/or be communicatively coupled to one or more databases and/or data sources (e.g., database 424). The database 424 can include one or more hardware memory devices to store binary data, digital data, or other forms of machine-readable information. The database 424 can include one or more electrical components, electronic components, programmable electronic components, reprogrammable electronic components, integrated circuits, semiconductor devices, flip-flops, arithmetic units, or the like. The database 424 can include at least one of a non-volatile memory device, a solid-state memory device, a flash memory device, or a NAND memory device. The database 424 can include one or more addressable memory regions disposed on one or more physical memory arrays. A physical memory array can include a NAND gate array disposed on, for example, at least one of a semiconductor device, integrated circuit device, or printed circuit board device.

For example, the database 424 can include a data repository configured to store operational data (e.g., telemetry or telematics data including ground speed, engine load, fuel level, DEF level, oil pressure, fluid temperatures, electrical system status, and location data), configuration data (e.g., user-selected parameter sets, default parameter templates, layout preferences, parameter ordering, visibility states, and machine-type-based configuration profiles), alert and threshold data (e.g., defined operating limits, threshold comparison results, alert states, escalation logs, and associated control instructions), user interaction data (e.g., parameter edits, reordering actions, view selections, interface customizations, or tooltips viewed), machine identity and classification data (e.g., machine identifiers, model types, equipment platform categories, associated implements, and machine-type mappings), system context and view state data (e.g., GUI layout versions, map view alignment, mode toggles, display transitions, and session data), and synchronization or communication metadata (e.g., update logs, version history, etc.). In some embodiments, the terms telemetry and telematics can be used interchangeably to refer to data collected from a machine 440 (e.g., via sensors 442) that reflects an operational state or performance metrics (e.g., fuel level, speed, load, temperature) associated with the machine 440.

The client device 430 can include a mobile device, laptop, desktop computer, smartphone, tablet, an onboard computing system (e.g., on a vehicle), or other computing devices. In some embodiments, the client device 430 can be operated by or associated with a user (e.g., client, operator, etc.). The client device 430 can execute various applications, including any platform for performing monitoring or configuration tasks, such as a software application, mobile application, web application, web browser, or other interface. For example, the client device 430 can execute an application 432 (e.g., a field operations application) that provides a user interface 434 for viewing telemetry data, customizing parameter displays, or receiving alerts via the client device 430. In some embodiments, the client device 430 can include various input or output devices (e.g., an input/output circuit, a pointing device, a keyboard, a display, a touch screen, a microphone, a speaker, etc.). For example, the client device 430 can receive and/or identify a selection or input (e.g., an updated configuration) via a user interaction with an input element (e.g., touch screen, keyboard, etc.) of the client device 430. In response to receiving the input, the client device 430 can transmit data to the data processing system 410, receive telemetry or configuration data in response, and display such data via an output element (e.g., a display of the client device 430).

In some implementations, the application 432 executed by the client device 430 can include a collection of software development tools included in a package (e.g., software development kit (SDK), application programming interface (API), integrated development environment (IDE), debugger). For example, the application 432 can include an API or debugger, or an SDK that includes an API, a debugger, an IDE, or related tools. In some implementations, the application 432 can include one or more libraries having functions that interface with system software (e.g., iOS, Android, Linux). As a further example, the application 432 can include a function configured to collect, process, or report telemetry-related data (e.g., machine parameters, configuration settings, performance thresholds), and a user or developer can insert the function into the application such that the function is triggered during user interaction or telemetry updates.

The application 432 can be installed and configured to operate on smartphones, tablets, or other mobile or computing devices. The application 432 can include a client-side module that communicates with the data processing system 410 over the network 402. The application 432 can be implemented using various programming languages and frameworks, such as Swift or Objective-C for iOS and Kotlin or Java for Android. In some implementations, the application 432 can be distributed through application marketplaces or integrated into an enterprise deployment framework. The application 432 can include a presentation layer (e.g., UI/UX), a logic layer, and a data layer. The presentation layer can render graphical elements of the user interface 434, such as telemetry parameter displays and configuration inputs. The logic layer can process telemetry updates, manage layout configurations, and enforce parameter rules or alert thresholds. The data layer can handle local storage, synchronization with the data processing system 410, and offline operation. The application 432 can utilize device hardware such as touchscreens, GPS, or sensors. In some implementations, the application 432 can operate in online or offline modes and can maintain access to parameter data or telemetry snapshots using caching or local persistence. The application 432 can include security features such as authentication, encryption, and secure communication protocols to protect data exchanges between the client device 430 and the data processing system 410.

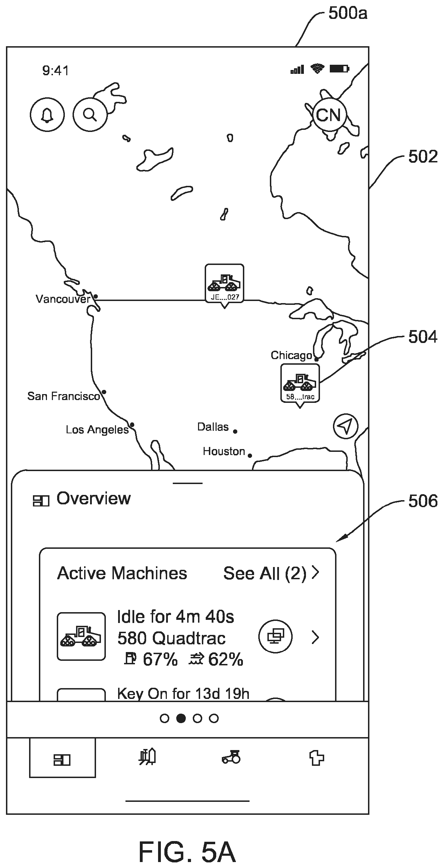

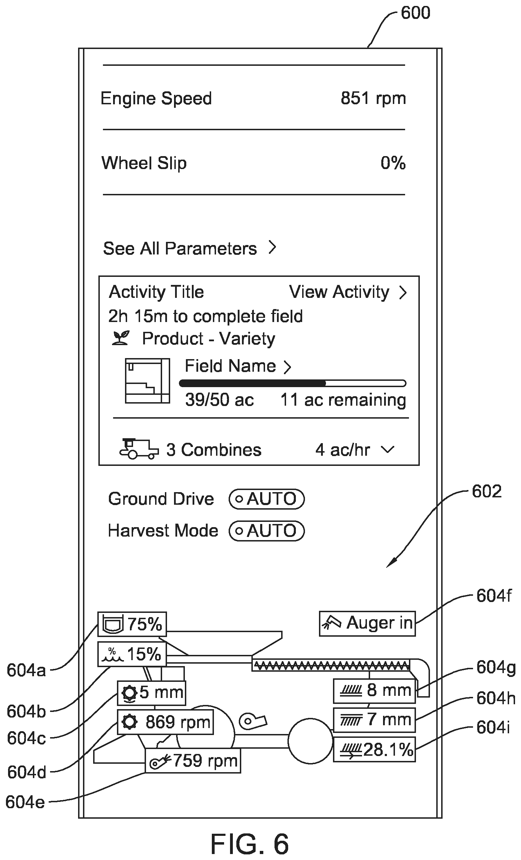

In some implementations, the client device 430 and the application 432 can be configured to provide one or more interfaces (e.g., graphical user interfaces (GUIs)), including a user interface 434 for viewing telemetry parameters, updating display configurations, receiving alerts, providing commands, and so on. In some examples, the user interface 434 can include content elements (e.g., information or images) and/or actionable elements (e.g., selectable buttons, drag-and-drop controls, reset options, prompts, etc.) presented on a display of the client device 430 executing the application 432. In some implementations, the client device 430 can update an arrangement of the content elements and/or actionable elements presented on the user interface 434 in response to receiving user input via an input device (e.g., touchscreen, keyboard, etc.), as further described herein with regard to FIGS. 5A-5H and FIG. 6.

The machines 440 can include one or more vehicles (e.g., vehicle 10 of FIG. 1), equipment, devices, or systems configured to generate telematics data for parameter monitoring. For example, the machines 440 can include agricultural vehicles or machines such as tractors, combines, sprayers, harvesters, balers, windrowers, forage harvesters, swathers, spreaders, planters, seeders, tillers, cultivators, rakes, or mowers. In some embodiments, the machines 440 can include specialty or application-specific agricultural machines such as grape harvesters, cotton pickers, silage wagons, manure spreaders, slurry tanks, or autonomous robotic implements. In some implementations, the machines 440 can include off-road vehicles used in construction or industrial settings, including excavators, backhoes, bulldozers, skid steer loaders, telehandlers, or graders. For example, the machines 440 can include various internal components (e.g., engines, transmissions, power take-off (PTO) units, hydraulic systems, and axles) and/or external components (e.g., trailed or attached implements, hitches, booms, blades, or lift arms). The machines 440 can include onboard computing systems or control units that process sensor inputs from sensors 442 and transmit telemetry values to the data processing system 410. In some implementations, the machines 440 can interface with the client device 430 and/or the data processing system 410 to facilitate parameter customization (e.g., by providing telematics data collected via sensors 442).

The sensors 442 can include any combination of hardware and/or software components configured to detect, measure, sense, interpret, and/or transmit values corresponding to machine operation, performance, or conditions. For example, the sensors 442 can include fuel level sensors, speed sensors, engine load sensors, coolant temperature sensors, oil pressure sensors, brake sensors, or other devices configured to monitor driveline components, electrical subsystems, or operational parameters. The sensors 442 can generate raw telemetry data during machine operation and can transmit this data to the data processing system 410 or the client device 430 for display, threshold evaluation, or parameter customization. In some embodiments, the sensors 442 are embedded within the machines 440 and communicate with onboard control units or external processing systems over the network 402.

In some implementations, the data processing system 410 can execute, cause execution of, and/or otherwise perform various operations to facilitate telemetry analysis, parameter display customization, or alert generation. In some implementations, the data processing system 410 can include one or more subcomponents or systems configured to execute, cause execution of, and/or otherwise perform operations for telemetry analysis, parameter display customization, or alert generation, such as one or more of the telematics system 418, customization system 420, and/or alert system 422.

In some embodiments, the data processing system 410 and/or telematics system 418 can receive telematics data for at least one agricultural machine. That is, the data processing system 410 and/or the telematics system 418 can receive machine-generated data representing real-time operating conditions of the agricultural machine (e.g., ground speed, fuel level, DEF level, engine load, or other performance parameters). For example, receiving can include the data processing system 410 and/or the telematics system 418 retrieving telemetry values from the sensors 442 of the agricultural machine 440 and interpreting the data for parameter display or threshold evaluation. In some implementations, the telematics data can be received periodically, continuously, or in response to an event or other condition (e.g., upon occurrence of a predefined condition, based on a polling request, etc.). The telematics or telemetry data can include raw data (e.g., unmodified or unprocessed sensor outputs), normalized data, or derived metrics generated onboard or externally to the machine 440 (e.g., using the sensors 442, a computer onboard the machine 440, an external monitoring system or computing device, etc.).

In some embodiments, responsive at least in part to a selection of the at least one agricultural machine via a graphical user interface, the data processing system 410 and/or customization system 420 can cause a display of a first set of parameters in at least one static field of the GUI and a second set of parameters available for customization in at least one dynamic field of the GUI. For example, the data processing system 410 and/or customization system 420 can receive or identify a selection or input corresponding to a particular agricultural machine 440, such as an operator interaction with a selectable icon or graphical object displayed in a map view or list view presented by the user interface 434 of the application 432. In some examples, the data processing system 410 and/or customization system 420 can identify the selection through a tap or click gesture, a selection from a dropdown or menu, or another form of interaction that associates a currently displayed interface state with a machine 440. For example, the data processing system 410 and/or customization system 420 can identify or receive a selection including metadata or identifiers (e.g., machine ID, type, location) used to retrieve corresponding telemetry values and display configurations for a particular machine 440.

In response to the selection of the agricultural machine 440, the data processing system 410 and/or customization system 420 can cause the client device 430 to generate or render a display (e.g., user interface 434) with one or more static fields configured to display the first set of parameters and one or more dynamic fields configured to display the second set of parameters. For example, the first set of parameters can include baseline or default telemetry values that are non-editable or persistently shown on user interface 434 across one or more machines (e.g., ground speed, fuel level, DEF level), and the second set of parameters can include values that are customizable by the operator (e.g., engine oil pressure, coolant temperature, engine load, etc.). In some examples, the dynamic field can include interactive controls for selecting, reordering, or replacing individual parameters (e.g., using a drag-and-drop interface, "add" or "delete" buttons, or menu-based interaction). In some embodiments, the data processing system 410 and/or customization system 420 can cause the client device 430 to visually distinguish the dynamic fields from the static fields by arranging one or more fields in a unified container or split display layout (e.g., separately arranged sections) via the user interface 434.

In some implementations, the first set of parameters and the second set of parameters can be based at least in part on the telematics data for the at least one agricultural machine. For example, the data processing system 410 can receive ground speed data (e.g., 6.2 mph) from a speed sensor of the agricultural machine 440, process the data, and cause the client device 430 to display a ground speed parameter with the value (e.g., 6.2 mph) in a static field of the user interface 434. The data processing system 410 can also receive engine load data (e.g., 87%) from an engine control module or torque sensor, process the data, and cause the client device 430 to display an engine load parameter with the value (e.g., 87%) in a dynamic field of the user interface 434.

In some implementations, responsive at least in part to an interaction with the second set of parameters via the GUI, the data processing system 410 and/or customization system 420 cause the GUI to update a configuration of the second set of parameters in the at least one dynamic field in accordance with the interaction. For example the data processing system 410 and/or customization system 420 can receive an input to reorder one or more of the second set of parameters (e.g., moving engine load above coolant temperature), replace a displayed parameter (e.g., replacing coolant temperature with hydraulic pressure), or remove a parameter entirely (e.g., deleting engine oil pressure) via the user interface 434. The data processing system 410 and/or customization system 420 can identify the interaction based on gesture input (e.g., drag-and-drop), selection of a control (e.g., button press or toggle), or another form of UI-based input via the user interface 434. In some implementations, the data processing system 410 and/or customization system 420 can cause the client device 430 to update the layout, selection, or ordering of the parameters displayed within the dynamic field in accordance with the interaction by modifying a stored or active configuration state associated with the selected machine 440 and transmitting rendering instructions to the user interface 434 that apply the updated configuration logic to the current parameter layout. For example, in response to an operator adding a new parameter (e.g., battery voltage) using a dropdown menu, the user interface 434 can display the corresponding telemetry value in a newly generated dynamic field positioned according to the current layout logic.

In some embodiments, the data processing system 410 and/or alert system 422 can cause the GUI to display an alert based on at least one parameter of the first set of parameters or the second set of parameters satisfying a corresponding operational threshold. For example, the data processing system 410 and/or alert system 422 can evaluate telemetry data for a given parameter (e.g., coolant temperature, hydraulic pressure, engine load) against a predefined threshold value or range and determine whether the parameter exceeds, falls below, or otherwise deviates from the threshold. In response to identifying a threshold condition (e.g., coolant temperature exceeding 220°F, fuel level falling below 5%), the data processing system 410 and/or alert system 422 can cause the client device 430 to generate a visual indicator (e.g., color change, icon, banner, pop-up, or blinking element) in the corresponding static or dynamic field of the user interface 434. In some implementations, the data processing system 410 can log or transmit alert event data to the database 424 or initiate a control signal for automated response, as further described herein.

Referring generally to FIGS. 5A-5H, illustrations of graphical user interfaces 500a-500h for parameter customization are shown, according to an exemplary embodiment. In some embodiments, at least one (e.g., each) of the graphical user interfaces 500a-500h can include the same or similar functionality as described regarding the user interface 434 of FIG. 4. Referring now to FIG. 5A, the graphical user interface (GUI) 500a can include a map interface 502 configured to display locations of a plurality of agricultural machines across a geographic region. For example, the map interface 502 can include visual icons or markers (e.g., machine identifiers, status badges) corresponding to each machine, and at least one (e.g., each) icon can positioned on the map based on location data (e.g., GNSS, cellular triangulation) transmitted from the machine (e.g., to the data processing system 410 of FIG. 4). For example, the GUI 500a can display a first icon 504 shown near a sub-location on the map interface 502 corresponding with a first machine (e.g., near Chicago), and the GUI 500a can display a second icon shown near a sub-location on the map interface 502 corresponding with a second machine (e.g., near Vancouver). In some implementations, the GUI 500a can include, display, and/or update a plurality of icons or graphics representing a machine or machine type (e.g., sprayer, tractor, combine), a textual identifier, or a preview of the machine state (e.g., idle, moving, active, inactive). The GUI 500a can also include interface controls for panning or zooming map interface 502 (e.g., using magnification icons), for toggling visibility of parameter overlays, or for switching between map and telemetry views.

In some embodiments, the GUI 500a can include a status panel 506 (e.g., an overview section or active machines panel), which can present a list or summary of active machines corresponding to the displayed map region of the map interface 502. In some implementations, the status panel 506 can be populated in response to a selection of a region or another interaction with the map interface 502 (e.g., zooming in, zooming out, scrolling or swiping, etc.). For example, in response the GUI 500a displaying a new portion or region of the map interface 502 with one or more icons of machines within the portion or region, the GUI 500a can update the status panel 506 to include additional information associated with the machines within the portion or region. The status panel 506 can display a consolidated view, summary view, or favorites view by displaying a subset of parameters for a particular machine, such as a machine model or identifier (e.g., "580 Quadtrac"), an operational status or runtime (e.g., "Idle for 4m 40s"), and/or other parameters (e.g., fuel level at 67%, DEF level at 62%, etc.). The status panel 506 can further include a link to view additional machine information associated with a particular machine, a link to view information associated with multiple monitored machines (e.g., "See All"), and an indicator of total number of machines within the region of the map interface 502 (e.g., "2"). In some examples, the map interface 502 and the status panel 506 can be dynamically updated based on incoming telemetry data or user interactions (e.g., filtering, sorting, or selecting a particular machine for configuration).

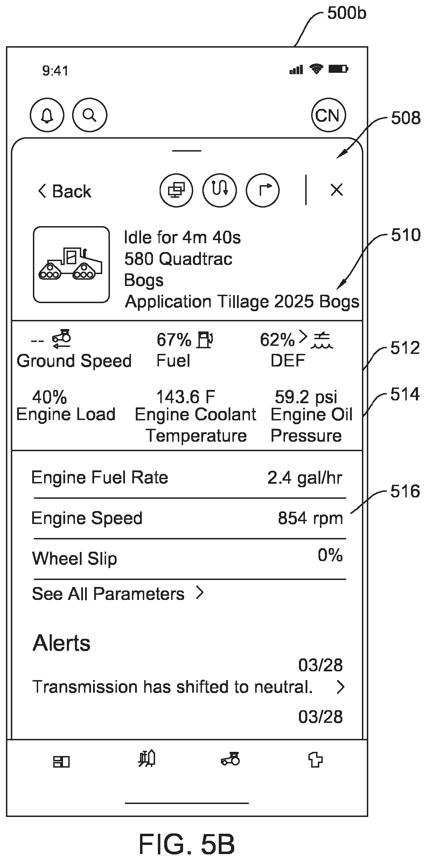

In some embodiments, the GUI 500a can include logic for handling interaction transitions to more detailed parameter displays or alerts screens. For example, a user can select a particular machine shown in the status panel 506, which can trigger the application 432 to request and render a more detailed view (e.g., GUI 500b of FIG. 5B) corresponding to the selected machine. The GUI 500a can include view state logic or UI transition controls (e.g., back arrows, dropdown toggles, modal transitions) that maintain continuity between the map interface 502 and the more detailed telemetry displays, preserving user context across view changes. In some examples, metadata associated with the selected machine can be passed to downstream displays to prepopulate display fields, parameter layouts, or alert sections. In some implementations, the GUI 500a can queue and/or cache telemetry values or configuration states associated with each machine to improve response times and reduce latency during view transitions. The GUI 500a can also include a header portion with additional information and/or input elements, such as a bell or alert button, a search icon, and/or a profile icon or badge, and the GUI 500a can display various information, perform updates, and/or transition between views based on interactions or selections corresponding with the header portion.

Referring now to FIG. 5B, the graphical user interface (GUI) 500b can include a parameter display 508 rendered in response to a selection of a particular machine icon (e.g., first icon 504) or entry from the GUI 500a of FIG. 5A. For example, the GUI 500b can present generate the parameter display 508 with a machine overview section 510 and a parameter display region including first fields 512, second fields 514, and additional fields 516. That is, the GUI 500b can populate and/or update one or more of first fields 512, second fields 514, and/or additional fields 516 to display telemetry values associated with the selected machine. The machine overview section 510 can include a textual and graphical summary of an operational context of the selected machine, such as a status message (e.g., "Idle for 4m 40s"), a machine model identifier (e.g., "580 Quadtrac"), an operator or field assignment (e.g., "Application Tillage 2025 Bogs"), and/or a machine icon representing the selected machine type. In some implementations, the machine overview section 510 can also include quick access buttons for machine-level actions or additional configuration settings (e.g., connecting to an onboard display, accessing a map view, etc.).

In some embodiments, the parameter display region of GUI 500b can include the first fields 512 (e.g., static fields) to display the first set of parameters, the second fields 514 (e.g., dynamic fields) to display one or more of the second set of parameters, and the additional fields 516 to display additional ones of the second set of parameters. That is, the static fields 512 can be configured to display non-editable, baseline parameters that remain visible across machine contexts (e.g., ground speed, fuel level, DEF level), and the dynamic fields 514 and the additional fields 516 can be configured to display operator-customizable parameters that can vary based on a preference, machine type, or operational task (e.g., engine load, engine coolant temperature, engine oil pressure, engine fuel rate, engine speed, wheel slip). In some examples, the GUI 500b can populate or update fields to include one or more of a parameter label, an associated telemetry value received from the agricultural machine, a graphical icon associated with the parameter, and/or unit of measurement. For example, the parameter display region can include first fields 512 for ground speed, fuel level, and DEF level (e.g., non-editable fields persistently shown across machines) and the dynamic fields 514 and the additional fields 516 for customizable or reorderable parameters such as engine load (e.g., 40%), engine coolant temperature (e.g., 143.6°F), engine oil pressure (e.g., 59.2 psi), engine fuel rate (e.g., 2.4 gal/hr), engine speed (e.g., 854 rpm), and wheel slip (e.g., 0%). In some embodiments, each parameter displayed via the static fields 512, dynamic fields 514, and/or additional fields 516 can be presented as a tile or segment within the GUI 500b.

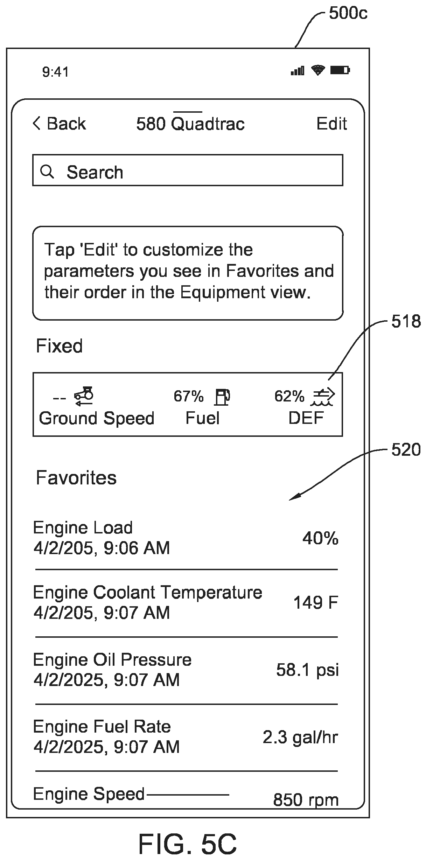

In some implementations, the GUI 500b can support interactions for modifying the display configuration of the second set of parameters in the second fields 514 and/or additional parameters in the additional fields 516. For example, the GUI 500b can include interface controls for accessing additional configuration options (e.g., "See All Parameters"), which can trigger a transition to the parameter customization display shown in FIG. 5C. In addition, the GUI 500b can include a section or region configured to display alerts in response to telemetry values associated with parameters satisfying alert thresholds (e.g., predefined error conditions). For example, the GUI 500b can include an alert section with a message indicating a machine transmission shift to neutral, along with a corresponding timestamp (e.g., 03/28). In some embodiments, the GUI 500b can include additional detail accessible via expandable links or dropdowns included in the alert region or section. In some embodiments, the GUI 500b can generate, render, and/or display alerts automatically in response to received telemetry values exceeding a predefined threshold or triggering a condition. The GUI 500b can also update the parameter display 508 intermittently, continuously, or periodically in response to receipt of updated telematics or telemetry data such that an operator can view near real-time information for the selected machine via the GUI 500b.

Referring now to FIG. 5C, the graphical user interface (GUI) 500c can include a parameter customization view generated in response to a selection or interaction with the parameter display 508 of FIG. 5B. For example, the GUI 500c can be generated or triggered when an operator selects an option or link (e.g., a "See All Parameters" link) and can present an interface for viewing and modifying the arrangement of parameters displayed in a machine view. For example, the GUI 500c can include a static parameter region 518 with first fields and parameters and a customizable parameter region 520 with second fields and parameters. As shown, the static parameter region 518 can display fixed parameters (e.g., ground speed, fuel level, DEF level) that persist across machine views. That is, the GUI 500c can restrict, prevent, or block reordering of the first fields such that values of the parameters in the static parameter region 518 can be updated but the static or fixed parameters are not removed. For example, the GUI 500c can populate or update the static parameter region 518 based on telematics data received from one or more sensors or subsystems of a selected machine (e.g., speed sensors, fuel tank monitors, DEF system sensors) and prevent removal of the first set of parameters from the parameter region 518.

In some embodiments, the customizable parameter region 520 can include parameters selected by the user for inclusion in a dynamic field of the parameter display (e.g., via second fields 514 or additional fields 516 of FIG. 5B). For example, the customizable parameter region 520 can include a list of favorites parameters that can be reordered, removed, or replaced using GUI-based interactions (e.g., tap, hold-and-drag, or dropdown selections). In some implementations, the GUI 500c can display additional metadata associated with one or more displayed parameters or corresponding values (e.g., timestamp of a recent reading, units of measurement, etc.). For example, the customizable parameter region 520 can include entries for engine load (e.g., 40%, timestamped), engine coolant temperature (e.g., 149°F), engine oil pressure (e.g., 58.1 psi), engine fuel rate (e.g., 2.3 gal/hr), engine speed (e.g., 850 rpm), and various additional parameters. In some embodiments, each parameter of the customizable parameter region 520 can be presented with entry a live telemetry value or a recently updated reading transmitted from the corresponding machine. In some examples, the GUI 500c can include a search bar, dropdown menus, or filter buttons to assist the user in locating parameters to add or reorder. In some embodiments, the GUI 500c can transition to an "Edit" mode that exposes drag handles, checkboxes, or reorder arrows alongside each parameter tile to support quick customization, as described further herein. Upon completion of the customization, the updated configuration can be stored locally (e.g., on a client device) or remotely (e.g., in a database) and used to render an updated parameter layout.

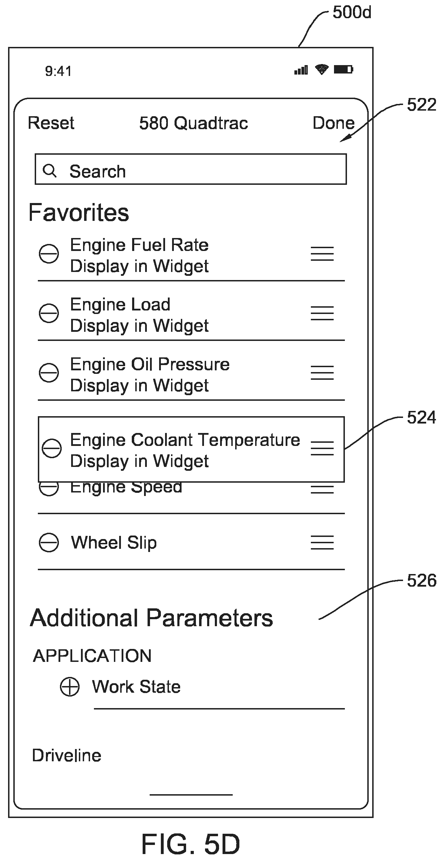

Referring now to FIG. 5D, the graphical user interface (GUI) 500d can include a customization interface 522 configured to support reordering, selection, and management of parameter fields for a selected agricultural machine. For example, the GUI 500d and customization interface 522 can be rendered in response to a selection of the "edit" option shown in GUI 500c of FIG. 5C. In some examples, the GUI 500d can present the customization interface 522 (e.g., via a display of a client device) to receive customization inputs from the user, such as an input to reorder fields or parameters, select display settings, or reset to a default layout. For example, the customization interface 522 can include interactive controls (e.g., "Reset," "Done") that modify the current parameter layout state or confirm an updated configuration. In some embodiments, the GUI 500d and/or customization interface 522 can support gesture-based and control-based inputs (e.g., drag-and-drop reordering, tap-to-select interactions, and long-press options to expose additional configuration options). Additionally, the GUI 500d and/or customization interface 522 can also include a search element configured to receive a search term or query, and the GUI 500d can perform a search operation to locate a particular parameter from an expanded set of available telemetry fields in response to the input via the search element.

In some implementations, the customization interface 522 of the GUI 500d can display a list of selected parameters under a "Favorites" section corresponding to one or more of the second set of parameters displayed via the dynamic and additional fields of FIG. 5B. For example, each parameter entry or field in the Favorites section can include a label identifying a corresponding parameter (e.g., "Engine Load") and a drag handle or icon for modifying an ordering of the displayed parameters (e.g., via touch input on a mobile device). For example, the customization interface 522 of the GUI 500d can display a selected list of parameters such as "Engine Fuel Rate," "Engine Load," "Engine Oil Pressure," "Engine Coolant Temperature," "Engine Speed," and "Wheel Slip" with a corresponding icon, drag handle, and display indicator (e.g., "Display in Widget") triggered in response to a partial selection or interaction with a particular parameters. In some examples, in response to an selection or interaction with a parameter 524 (e.g., a drag of a drag-and-drop), the GUI 500d can generate a display indicator for the selected parameter 524 to indicate that the selected parameter 524 is currently activated for updates (e.g., reordering, adding, removing, etc.). Further, the GUI 500d can toggle on or off the display indicator if an operator removes input (e.g., stops pressing) and/or provides input via the selected parameter 524. In some, the customization interface 522 of the GUI 500d can update a configuration state in response to an interaction or selection (e.g., reordering or rearrangement, selection of a parameter, deletion of a parameter, etc.) and cause storage of data corresponding with the configuration for subsequent use and/or retrieval (e.g., for reloading or restoring favorite parameters).

Additionally, the customization interface 522 of the GUI 500d can include an additional parameters section 526, which can display one or more telemetry parameters not currently included in the active Favorites list (e.g., not included in a set of second parameters). For example, additional parameters can be grouped by system category (e.g., "application," "driveline," etc.) and include available parameters not yet selected for display (e.g., a "Work State"). In some embodiments, each additional parameter can include an icon (e.g., "+") indicating that the parameter can be added to the current favorites, and each of the current favorite parameters can include an icon (e.g., "-") indicating that the parameter can be removed from the current favorites. In response to a user selecting one of the additional parameters of the additional parameters section 526, the GUI 500d can cause the selected parameter to be added to the Favorites list and repositioned in accordance with the user interaction. In some embodiments, the GUI 500d can validate whether the selected parameters satisfy conditions or constraints (e.g., a total number of dynamic fields, fields to be included, display compatibility, etc.) and generate a warning or tooltip if a selection results in an invalid configuration. Upon confirming changes (e.g., pressing "Done"), the customization interface 522 of the GUI 500d can use the updated parameter order to generate or refresh a parameter display view for the selected machine, and the layout can be propagated to other views or stored for subsequent access.

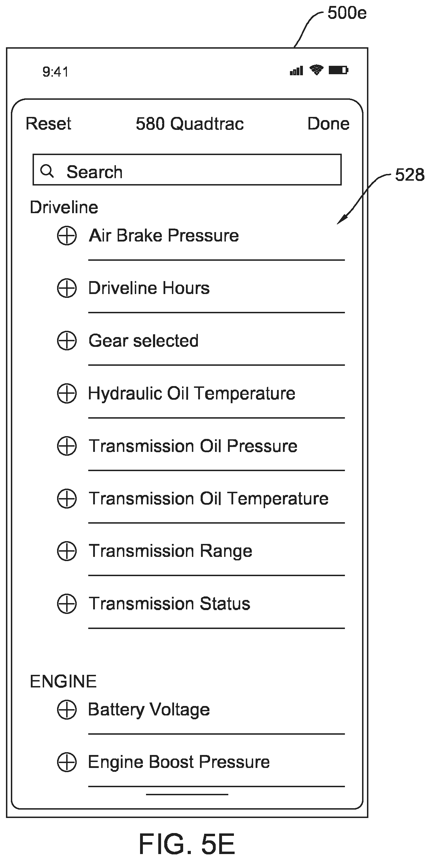

Referring now to FIG. 5E, the graphical user interface (GUI) 500e can include an expanded parameter selection interface 528 configured to display an expanded set of telemetry parameters that are available for inclusion in the Favorites list of a selected agricultural machine. In some implementations, the expanded parameter selection interface 528 of GUI 500e can be rendered in response to an interaction with the additional parameters section 526 of GUI 500d (e.g., selecting a system group such as "Driveline") and can present one or more parameters corresponding to the selected group or category. In some embodiments, the expanded parameter selection interface 528 can be rendered in response to scrolling or navigating to an additional portion of the additional parameters section 526 of GUI 500d (e.g., scrolling down on the interface). For example, in response to an operator selecting "Driveline" or scrolling to a driveline section, the GUI 500e can display parameters such as "Air Brake Pressure," "Driveline Hours," "Gear Selected," "Hydraulic Oil Temperature," "Transmission Oil Pressure," "Transmission Oil Temperature," "Transmission Range," and "Transmission Status" with associated icons (e.g., "+") indicating that a parameter is available to add (e.g. available for customization) but not included in the Favorites list or current configuration. In some embodiments, the expanded parameter selection interface 528 of GUI 500e can display various additional sets of grouped parameters, such as "Battery Voltage" and "Engine Boost Pressure" under an "ENGINE" heading.

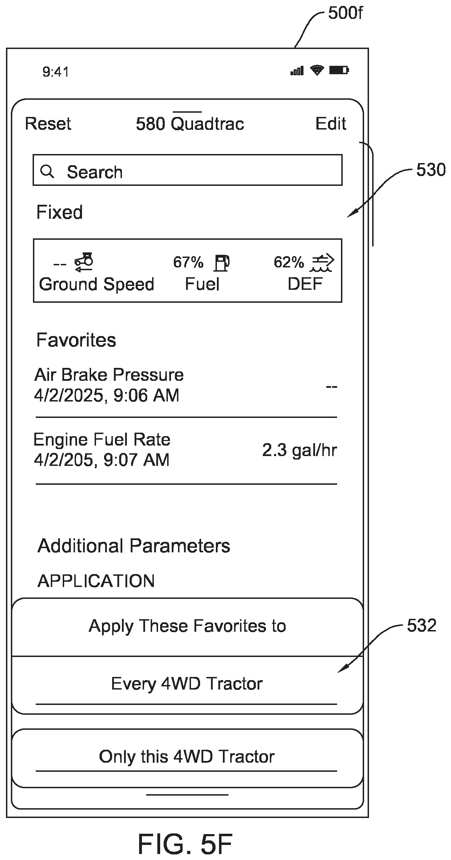

Referring now to FIG. 5F, the graphical user interface (GUI) 500f can include a parameter review and propagation interface 530 configured to apply a selected Favorites configuration across a machine group or an individual machine instance. In some implementations, the parameter review and propagation interface 530 of GUI 500f can be generated in response to completing or confirming a customization interaction in the customization interface 522 or expanded parameter selection interface 528 of FIGS. 5D-5E. For example, the parameter review and propagation interface 530 of GUI 500f can include a fixed parameter section (e.g., "Fixed") displaying parameters from the first set (e.g., ground speed, fuel level, DEF level), a customizable parameter section (e.g., "Favorites") displaying a subset of the second set of parameters currently selected for dynamic display (e.g., "Air Brake Pressure," "Engine Fuel Rate"), and prompt with one or more selectable elements 532 for applying the current Favorites configuration to other machines.

For example, the parameter review and propagation interface 530 of the GUI 500f includes an action region with one or more selectable elements 532, and each of the selectable elements 532 can be configured to receive an input to apply a current configuration or set of favorites across one or more machines. In some examples, each of the selectable elements 532 can be customized based on a machine type of a corresponding machine. For example, the selectable elements 532 can include options to apply the current favorites or configuration to "Every 4WD Tractor" or to "Only this 4WD Tractor." That is, the selectable elements 532 can include one or more buttons, links, or controls that trigger the GUI 500f to propagate the updated parameter layout to a broader machine group (e.g., a total number of machines of a same category or class) or restrict the update to a single machine. For example, the parameter review and propagation interface 530 of the GUI 500f can render and/or update the selectable elements 532 to include information associated with a particular machine or type of machine based on a class or name (e.g., "Only this 4WD Tractor," "Only to this Combine," etc.). In some embodiments, selecting an option configured for a machine type (e.g., "Every 4WD Tractor") can trigger identification of registered machines of the machine type in a machine group or fleet, and the GUI 500f can apply the stored favorites configuration to the display layout for one or more (e.g., each) identified registered machine having the machine type. In another example, selecting "Only this 4WD Tractor" can cause the GUI 500f to associate the configuration state with a machine identifier of the currently selected machine (e.g., to restrict the update to the currently selected machine). In some examples, the GUI 500f can display additional machine groupings, subclassifications, or filtering logic for applying parameter layouts based on machine type, capability, job role, or location via the parameter review and propagation interface 530.

In some implementations, the GUI 500f can validate a current configuration against parameters or attributes (e.g., telemetry capabilities) of other machines in a group. For example, before applying the configuration to "Every 4WD Tractor," the GUI 500f can determine whether each selected parameter (e.g., Air Brake Pressure, Engine Fuel Rate) is supported by each 4WD tractor and can provide warnings, substitutions, or alternate mappings in response to determining each selected parameter is not supported. The GUI 500f can also be configured for version control, timestamping, or tracking of applied configurations to audit, revert, or synchronize parameter customizations across machines. Upon confirmation of a selected configuration (e.g., by selecting one of the buttons in an action region), the GUI 500f can trigger an update to a parameter display or configuration and initiate display refreshes or synchronization processes for affected machines.

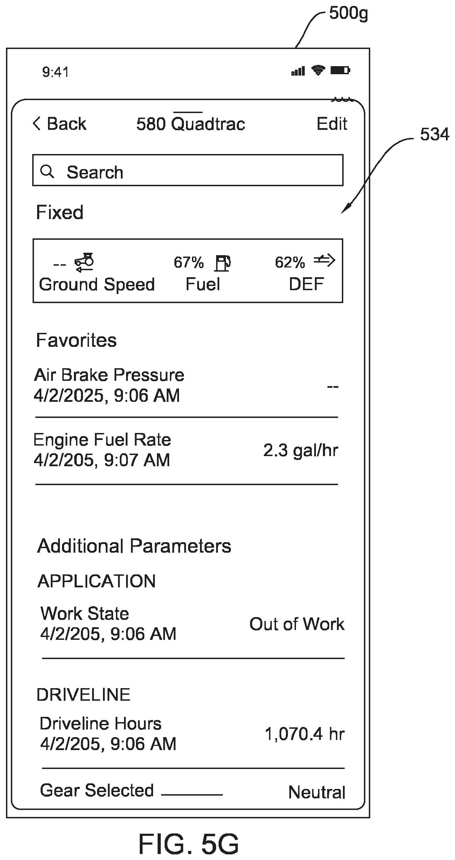

Referring now to FIG. 5G, the graphical user interface (GUI) 500g can include a parameter configuration view 534 configured to display a customized parameter layout for a selected machine based on a configuration update. In some implementations, the parameter configuration view 534 can be rendered after applying and/or confirming a favorite configuration (e.g., favorite set of parameters) via the parameter review and propagation interface 530 of FIG. 5F and can reflect the currently selected parameter arrangement for the machine (e.g., 580 Quadtrac). For example, the parameter configuration view 534 can include a fixed parameter region displaying static parameters (e.g., ground speed, fuel level, DEF level), a dynamic or customizable favorites region displaying a subset of dynamic parameters (e.g., air brake pressure, engine fuel rate), and an additional parameters region displaying additional dynamic parameters (e.g., parameters measured from the machine but not designated as favorites).

In some embodiments, the parameter configuration view 534 of the GUI 500g includes updated telemetry parameters with associated timestamps and values. For example, the parameter configuration view 534 can include an updated or rearranged ordering of favorites, such as air brake pressure (e.g., timestamped 4/2/2025, 9:06 AM) and engine fuel rate (e.g., 2.3 gal/hr at 9:07 AM). In some examples, the additional parameters section of the parameter configuration view 534 can include telemetry data points that are relevant to the selected machine but not pinned to a favorites section or region. For example, an "application" section can include a parameter for work state (e.g., "Out of Work"), and a "driveline" section can include parameters such as driveline hours (e.g., 1,070.4 hr) and gear selected (e.g., "Neutral"). For example, the parameter configuration view 534 of the GUI 500g can display each parameter with one or more of a value, unit of measurement, and associated timestamp to provide context about telemetry updates.

In some implementations, the parameter configuration view 534 can include indicators or controls used to reflect or modify inclusion of parameters in the favorites region. For example, the GUI 500g can provide a visual indicator within the parameter configuration view 534 adjacent to a parameter currently selected as a favorite (e.g., next to air brake pressure) to show that the parameter has been configured for dynamic display. In some examples, the visual indicator can be used to trigger a transition to an edit mode, highlight an active parameter, or provide access to additional controls (e.g., remove, reorder, inspect telemetry history) via the GUI 500g. In some embodiments, the GUI 500g can dynamically update the parameter configuration view 534 in response to telemetry updates or operator interactions (e.g., to reflect changes in work state, operating time, gear position, etc.).

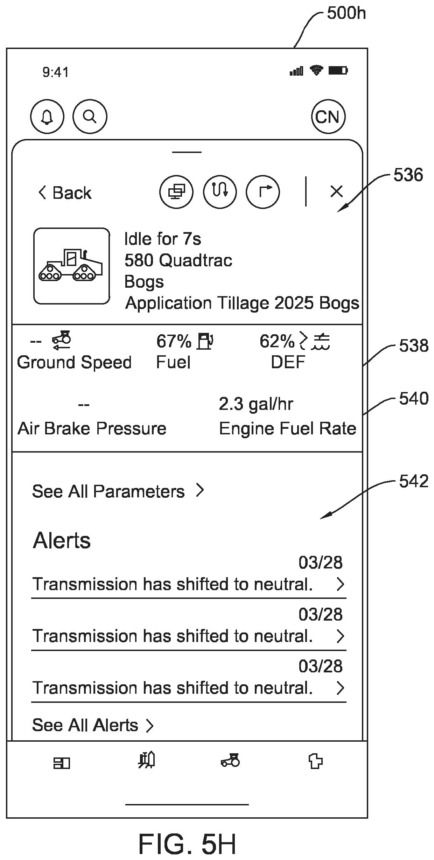

Referring now to FIG. 5H, the graphical user interface (GUI) 500h can include a telemetry display and alert view 536 configured to present updated parameter values and alert notifications for a selected agricultural machine. In some implementations, the telemetry display and alert view 536 can be rendered in response to a transition from another GUI (e.g., GUI 500g) or after a telemetry update is received for a machine currently being monitored. In some embodiments, the telemetry display and alert view 536 of the GUI 500h can include a fixed parameter section 538, a dynamic parameter section 540, and an alert display region 542. For example, the GUI 500h can generate or render the fixed parameter section 538 to display ground speed, fuel level, and DEF level as static parameters that are not modifiable or reconfigurable by the operator, and can further generate or render the dynamic parameter section 540 to include telemetry values from a customized set of parameters (e.g., air brake pressure, engine fuel rate). In some examples, each parameter displayed in the GUI 500h can include a corresponding telemetry value (e.g., real-time or near-real-time data), unit of measurement, and/or a placeholder or status indicator (e.g., a strikethrough or line "--" to indicate corresponding data is not currently available).

In some implementations, the GUI 500h can display alerts in the alert display region 542 of the telemetry display and alert view 536 based on thresholds or conditions associated with the static and/or dynamic parameters. For example, the alert display region 542 can present one or more or a series of alert messages (e.g., "Transmission has shifted to neutral") associated with a corresponding timestamp (e.g., 03/28). In some examples, the alert display region 542 can include one or more visual indicators or badges highlighting a status level or frequency of a particular condition (e.g., repeated transmission neutral shifts), and can include links or affordances to expand the view or drill into additional alert data (e.g., via a "See All Alerts" link). In some examples, the GUI 500h can dynamically update the alert display region 542 based on received telemetry values, detected events, or other data corresponding to machine conditions.

In some embodiments, the telemetry display and alert view 536 can provide real-time updates and maintain display continuity across multiple view states and/or interface transitions. For example, the GUI 500h can periodically poll for telemetry data from a selected machine or group of machines and refresh parameter fields or alert entries within the telemetry display and alert view 536 based on a detected change or updated data. In some embodiments, the GUI 500h can include view buttons or indicators (e.g., a "back" control or forward navigation element) and can transition back to map views (e.g., GUI 500a), detail panels (e.g., GUI 500b), or configuration interfaces (e.g., GUI 500c) responsive to interactions or selections of the view buttons or indicators. In some examples, the GUI 500h can cache or temporarily store recent telemetry values for continuity during transitions or when a corresponding client device loses connectivity. In some examples, the telemetry display and alert view 536 of the GUI 500h can include interactive parameter tiles or expandable sections for displaying additional information about each parameter or alert, such as a telemetry source (e.g., a sensor or subsystem used to collect the telematics data corresponding to an alert), a historical trend of values, or a threshold that triggered a particular alert.

FIG. 6 is an illustration of a graphical user interface 600 for parameter customization including a machine-specific graphical representation 602, according to an exemplary embodiment. In some implementations, the graphical user interface (GUI) 600 and/or a machine-specific graphical representation 602 can be generated and rendered in response to a selection or confirmation of parameters for a selected agricultural machine (e.g., via GUIs 500c-500g of FIGS. 5C-5G). For example, the GUI 600 can include a machine-specific graphical representation 602 (e.g., a two-dimensional or three-dimensional rendering, a schematic, etc.) generated based on a physical configuration or operational layout of a particular agricultural machine (e.g., a combine, harvester, or other field equipment). In some implementations, the GUI 600 can further include a work progress and activity region configured to display contextual information related to an ongoing operation or field task. For example, the GUI 600 can display a task title (e.g., "Activity Title"), a time estimate to completion (e.g., "2h 15m to complete field"), a crop type or variety, a field name and progress bar (e.g., "39/50 ac, 11 ac remaining"), an equipment summary (e.g., "3 Combines"), and a rate value (e.g., "4 ac/hr"). Additionally, the GUI 600 can include controls for operation mode selections (e.g., toggles for "Ground Drive: AUTO" and "Harvest Mode: AUTO"), which can be displayed adjacent to or below the activity region.

In some embodiments, the GUI 600 can render a plurality of parameters 604a-604i (collectively, parameters 604) at one or more physical locations of the machine-specific graphical representation 602. That is, each of the parameters 604 can be rendered on a corresponding location on the machine-specific graphical representation 602 indicative of an actual location of a subsystem or component associated with the parameter 604. For example, the machine-specific graphical representation 602 of the GUI 600 can include parameter tiles or labels with values placed in corresponding locations for each of the parameters 604, such as engine speed (e.g., 851 rpm) placed near (e.g., in visual proximity to) a relative location of an engine on the machine-specific graphical representation 602 and wheel slip (e.g., 0%) placed near an relative location of a wheel on the machine-specific graphical representation 602. For example, parameter 604a can display a grain tank fill percentage (e.g., 75%) in visual proximity to a corresponding location for a grain tank on the machine-specific graphical representation 602, parameter 604b can show sieve opening width (e.g., 5 mm) near a corresponding location for a sieve on the machine-specific graphical representation 602, parameter 604c can present rotor speed (e.g., 869 rpm) in visual proximity to a corresponding location for rotor the machine-specific graphical representation 602, parameter 604d can display cleaning fan speed (e.g., 759 rpm) near a corresponding location for a cleaning fan on the machine-specific graphical representation 602, parameter 604e can represent engine load (e.g., 28.1%) near a corresponding location for an engine on the machine-specific graphical representation 602, and so on. Similarly, the GUI 600 can render additional parameters and/or alternative parameters (grain loss, cleaning shoe performance, auger status, etc.) based on a machine type corresponding with the machine-specific graphical representation 602. For example, the layout of the parameter labels in the machine-specific graphical representation 602 can be based on a mapping between known subsystem locations of the agricultural machine and/or telemetry sources associated with the machine type. In some embodiments, the GUI 600 can automatically update or reposition parameters 604 in response to identification of a machine type, a parameter selection, or an update to associated telematics data.

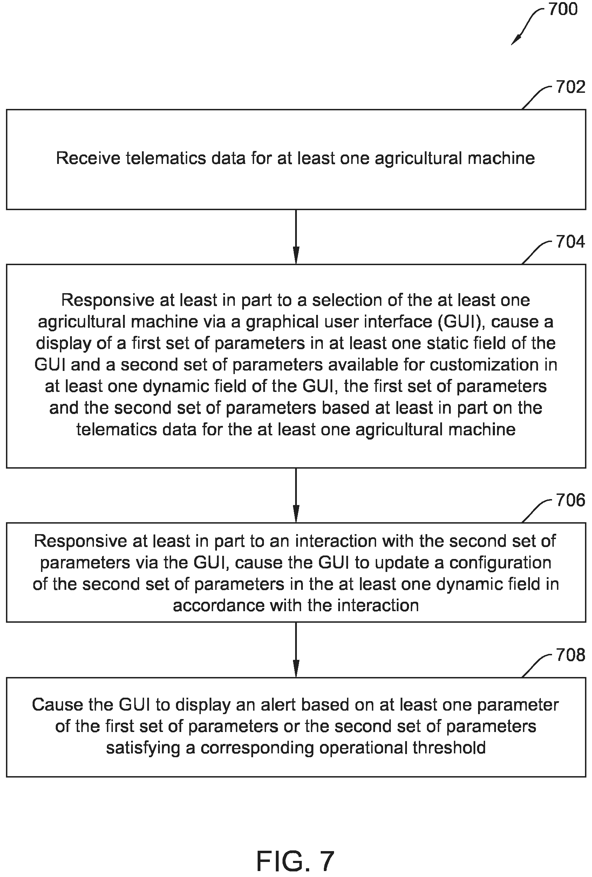

Referring to FIG. 7, a flowchart of a process 700 for parameter customization is shown, according to an exemplary embodiment. In some embodiments, process 700 can be a computer-implemented method executed or performed by one or more components or systems of FIGS. 1-3 (e.g., vehicle 10), FIG. 4 (e.g., client device 430, data processing system 410, etc.), FIGS. 5A-5H (e.g., GUIs 500a-500h), and/or FIG. 6 (e.g., GUI 600). In some embodiments, the steps of process 700 can be executed sequentially or in parallel (e.g., steps 702 and 704 can be performed in parallel). It should be understood that, in other embodiments, the steps of process 700 can be performed in any order, combined, and/or additional modifications implemented, such as the deletion of one or more steps and/or the addition of one or more steps.

In some embodiments, at step 702, the process 700 can include receiving, by one or more processors, telematics data for at least one agricultural machine. That is, the one or more processors (e.g., the data processing system 410 or the telematics system 418) can receive telematics data corresponding to operational parameters of the at least one agricultural machine (e.g., machine 440), including machine-generated data measured or computed by onboard sensors, control units, or subsystems. For example, receiving telematics data can include acquiring parameter values from one or more sensors 442 associated with the at least one agricultural machine, such as a speed sensor, engine control module, fuel level sensor, DEF sensor, torque sensor, hydraulic sensor, or transmission controller. In some implementations, the telematics data can include values representing real-time or near-real-time machine operation, such as engine speed, engine load, fuel level, DEF level, wheel slip, air brake pressure, gear selected, and so on. In some examples, the one or more processors can receive the telematics data periodically, continuously, or in response to a triggering condition or polling request. In some embodiments, the one or more processors can store the received telematics data in system memory 416 or database 424 for use in rendering a graphical user interface (e.g., GUI 500b, GUI 500h, or GUI 600), selecting a first set of parameters and a second set of parameters, and/or generating parameter display fields associated with a configuration state of the at least one agricultural machine.

In some embodiments, at step 704, the process 700 can include, responsive at least in part to a selection of the at least one agricultural machine via a graphical user interface (GUI), causing, by the one or more processors, a display of a first set of parameters in at least one static field of the GUI and a second set of parameters available for customization in at least one dynamic field of the GUI, the first set of parameters and the second set of parameters based at least in part on the telematics data for the at least one agricultural machine. That is, the one or more processors (e.g., data processing system 410 or customization system 420) can detect a selection of the at least one agricultural machine via a machine selector interface, a list view, or a map interface (e.g., as shown in GUI 500a), and generate a corresponding parameter display view (e.g., GUI 500b or 500c). In some implementations, the one or more processors can determine the first set of parameters (e.g., static parameters such as ground speed, fuel level, and DEF level) and the second set of parameters (e.g., dynamic or customizable parameters such as engine load, engine coolant temperature, engine oil pressure, air brake pressure, etc.) based at least in part on the received telematics data and/or layout logic. The one or more processors can then cause the GUI to render the first set of parameters in static fields that are fixed and/or non-editable, and the second set of parameters in dynamic fields that are configurable or customizable (e.g., reorderable, replaceable, or removable). For example, the one or more processors can cause a GUI to display a ground speed parameter in a static field and an engine fuel rate parameter in a dynamic field of the GUI along with a corresponding telemetry value derived from the telematics data associated with the selected agricultural machine.

In some embodiments, at step 706, the process 700 can include, responsive at least in part to an interaction with the second set of parameters via the GUI, causing, by the one or more processors, the GUI to update a configuration of the second set of parameters in the at least one dynamic field in accordance with the interaction. That is, the one or more processors (e.g., the customization system 420 or data processing system 410) can receive input from the GUI indicating a change to the second set of parameters, such as a reordering, replacement, or removal action applied to a dynamic parameter field (e.g., via GUI 500d or 500f). In response to the interaction, the one or more processors can update a configuration state corresponding to the second set of parameters and modify an ordering or composition of the dynamic fields rendered within the GUI. For example, the one or more processors can receive input to reorder the second set of parameters based on an interaction, such as dragging a parameter tile (e.g., moving engine fuel rate above engine load), replacing a parameter (e.g., swapping engine oil pressure with battery voltage), or removing a parameter entirely (e.g., deleting wheel slip from the dynamic field). For example, the one or more processors can cause the GUI to reflect the updated configuration of the second set of parameters in the at least one dynamic field by rendering a revised layout based on the updated configuration, which can be stored for later retrieval or propagation across groups of similar or related machines.

In some embodiments, at step 708, the process 700 can include causing, by the one or more processors, the GUI to display an alert based on at least one parameter of the first set of parameters or the second set of parameters satisfying a corresponding operational threshold. That is, the one or more processors (e.g., the alert system 422 or data processing system 410) can evaluate telemetry values associated with the first set of parameters or the second set of parameters and compare the values to one or more stored threshold conditions. In response to determining that a telemetry value satisfies a corresponding operational threshold (e.g., exceeds, falls below, or matches a trigger value), the one or more processors can cause the GUI (e.g., GUI 500b or GUI 500h) to render an alert notification associated with the triggering parameter. For example, the one or more processors can cause the GUI to display an alert based on a dynamic parameter (e.g., engine fuel rate exceeding 4.5 gal/hr) or a static parameter (e.g., DEF level falling below 10%) by rendering a visual alert message in a designated alert display region (e.g., alert display region 542). In some examples, the alert can include a timestamp, severity level, or associated parameter metadata, and the one or more processors can dynamically update or clear the alert display based on real-time telemetry updates or resolution of the triggering condition.

In some embodiments, the first set of parameters and the second set of parameters are updated in real-time based on the telematics data for the at least one agricultural machine. That is, the one or more processors (e.g., the data processing system 410 or telematics system 418) can receive updated telematics data for the at least one agricultural machine and dynamically update the display of the first set of parameters and the second set of parameters within the GUI (e.g., GUI 500b, GUI 500g, or GUI 500h). In some implementations, updating parameters in real time can include the one or more processors refreshing telemetry values displayed in one or more static fields associated with the first set of parameters and one or more dynamic fields associated with the second set of parameters. For example, the one or more processors can receive a new engine load value (e.g., 92%) from the agricultural machine 440 and update the corresponding dynamic field in the GUI to reflect an updated telemetry reading or measurement. In some examples, the GUI can periodically poll for telematics updates or receive push-based telemetry streams from machines 440 (e.g., via network 402), and the one or more processors can use the updates to continuously maintain an accurate, real-time, and/or near-real time representation of the machine state or operating conditions.

In some embodiments, the process 700 can include transmitting, by the one or more processors, a control signal to remotely disable the at least one agricultural machine in response to the alert. That is, the one or more processors (e.g., data processing system 410 and/or alert system 422) can generate and transmit a control signal based on detecting that at least one parameter of the first set of parameters or the second set of parameters satisfies a predefined operational threshold corresponding to a disabling condition, operational error, and/or fault. In some implementations, generating the control signal to remotely disable the at least one agricultural machine can include the one or more processors evaluating telemetry values received from the agricultural machine against predefined safety conditions, retrieving a machine identifier and communication address, and formatting a remote shutdown command in accordance with a machine-specific protocol (e.g., CAN bus command structure, encrypted telematics instruction, or secure API call) for a remote machine. For example, the one or more processors can determine that an engine coolant temperature parameter of the second set of parameters exceeds a threshold (e.g., 245°F), generate an alert corresponding to the overheat condition, and transmit a control signal to remotely disable one or more subsystems (e.g., propulsion, PTO, hydraulic power) of the agricultural machine 440 in response to the alert. For example, the one or more processors can transmit the control signal over network 402 to an onboard electronic control unit (ECU) or a safety controller of vehicle 10 configured to process the remote shutdown command and execute a controlled deactivation sequence to prevent and/or adjust operation of the vehicle 10. In some embodiments, transmitting the control signal can trigger a confirmation message or acknowledgment from the agricultural machine 440 and storing the confirmation or acknowledgement message with associated metadata (e.g., a corresponding timestamp, machine identifier, triggering condition, etc.). In some examples, the one or more processors can update the GUI (e.g., GUI 500h or GUI 600) to visually reflect the shutdown event by updating a status indicator, disabling interactive parameter tiles, or displaying a visual overlay indicating that the machine has been disabled.

In some embodiments, the process 700 can include causing, via the GUI, a display of a prompt including at least one selectable element for applying the configuration of the second set of parameters to respective second sets of parameters of a plurality of agricultural machines having a machine type that matches a machine type of the at least one agricultural machine. That is, the one or more processors (e.g., the data processing system 410 or customization system 420) can generate and render a prompt with one or more options via the GUI (e.g., GUI 500f) in response to detecting a confirmation or completion of a customization operation for the second set of parameters. In some implementations, the one or more processors can determine a machine type of the currently selected agricultural machine (e.g., 4WD tractor, combine, sprayer, etc.), identify one or more additional machines in a monitored fleet or group having the same machine type, and display a prompt offering selectable propagation options (e.g., "Apply to every 4WD Tractor," "Only this 4WD Tractor"). In some examples, the GUI can render the prompt with selectable buttons, toggle switches, or menu entries corresponding to propagation scopes (e.g., individual machine instance, same-type group, location-based groups, etc.). Upon, responsive to, or subsequent to receiving a selection of the propagation scope via the GUI, the one or more processors can update configuration states associated with the respective second sets of parameters for the identified machines and store the updated layout (e.g., using database 424) for subsequent rendering (e.g., via GUI 500g or GUI 500h). In some embodiments, the one or more processors can validate compatibility of the selected parameters with the telemetry capabilities of target machines and modify the layout (e.g., remove unsupported fields, map equivalent parameters, etc.). In some examples, the one or more processors can update the GUI to display the selected scope and display contextual or supporting information (e.g., number of machines affected, machine type, summary of the applied configuration, etc.).

In some embodiments, the configuration is based on the interaction with the second set of parameters. That is, the one or more processors (e.g., the data processing system 410 or customization system 420) can generate or update a configuration state for the at least one agricultural machine based at least in part on the interaction with the second set of parameters via the GUI (e.g., GUI 500c or GUI 500d). For example, the one or more processors can receive an interaction indicating a customization operation applied to a dynamic field of the GUI, such as a drag-and-drop gesture to reorder parameters, a selection input to add or remove a parameter, or a toggle indicating whether a parameter should be included in a Favorites view. Based on the interaction, the one or more processors can modify a data object (e.g., configuration object) representing the current arrangement of the second set of parameters. In some examples, the configuration can include metadata representing the ordering, selection, and/or status of the second set of parameters (e.g., which parameters are currently displayed, whether a parameter is active or pinned, etc.). In some implementations, the configuration can be used to update one or more subsequent GUIs (e.g., GUI 500g or GUI 500h) or applied across a machine group. In some embodiments, the one or more processors can store a timestamp and source of the interaction for auditability or synchronization (e.g., identifying when a configuration was changed and by which operator or device).

In some embodiments, the process 700 can include, responsive at least in part to receiving a selection of the at least one selectable element, updating, by the one or more processors, the respective second sets of parameters for one or more of the plurality of agricultural machines based on the configuration. That is, the one or more processors (e.g., the data processing system 410 or customization system 420) can detect a selection of an element of the GUI (e.g., a propagation option presented in GUI 500f) corresponding to a propagation scope for applying the configuration of the second set of parameters to a plurality of agricultural machines. In response to receiving the selection, the one or more processors can identify a machine group or set of machines having a machine type that matches the machine type of the at least one agricultural machine (e.g., a 4WD tractor type), retrieve or generate a configuration object corresponding to the second set of parameters, and update stored configuration data for each identified machine in accordance with the selected configuration. In some implementations, updating the respective second sets of parameters can include transmitting configuration data to client devices, updating stored parameter layout objects within a database (e.g., database 424), or generating rendering instructions for a GUI (e.g., GUI 500g or GUI 500h) that reflects the updated second set of parameters. In some examples, the one or more processors can validate that each parameter in the configuration is compatible with telemetry capabilities of each machine in the target group, perform substitutions or remove unsupported parameters, and update machine-specific configuration records with the validated layout. In some embodiments, the one or more processors can store metadata associated with the propagation event (e.g., machine types affected, operator ID, timestamp) and use the metadata to synchronize, revert, or audit parameter updates.

In some embodiments, the process 700 can include, responsive at least in part to receiving a request to reset the second set of parameters, restoring, by the one or more processors, a default configuration of the second set of parameters based on a machine type of the at least one agricultural machine. That is, the one or more processors (e.g., data processing system 410 or customization system 420) can detect a request triggered by a reset interaction via the GUI (e.g., GUI 500d or GUI 500f), such as a selection of a "Reset" button, a long-press gesture, or another control input corresponding to the second set of parameters, and retrieve a predefined default configuration associated with the machine type (e.g., 4WD tractor, combine, sprayer). In some implementations, restoring the default configuration can include updating the GUI to display preconfigured layout of dynamic fields based on stored templates or default profiles for the corresponding machine type in response to the reset request. For example, the one or more processors can restore a default configuration that includes a defined ordering and selection of dynamic parameters (e.g., engine load, engine oil pressure, engine fuel rate) for display in the dynamic field of a parameter display interface (e.g., GUI 500g). In some examples, the one or more processors can validate that the default configuration matches current telemetry capabilities of the selected machine and remove any unsupported parameters before updating the interface. In some implementations, restoring the default configuration can further include storing the reset state in association with the machine identifier, generating an audit record of the reset event, and updating the corresponding rendering logic used in other GUIs (e.g., GUI 500h or GUI 600) to reflect the restored state.

In some implementations, the default configuration is restored for at least one of the at least one agricultural machine selected via the GUI or a plurality of agricultural machines having a machine type that matches the machine type of the at least one agricultural machine. That is, the one or more processors (e.g., the data processing system 410 or customization system 420) can determine, based on an interaction received via the GUI (e.g., GUI 500f), whether the reset request corresponds to an individual machine instance or to a broader group of machines having the same machine type. In response to determining the scope of the reset, the one or more processors can retrieve a default configuration for the second set of parameters associated with the corresponding machine type (e.g., default dynamic parameters for a 4WD tractor or combine harvester) and apply the default configuration either (i) to the at least one agricultural machine identified via the GUI or (ii) to each machine in the plurality of agricultural machines having the matching machine type. For example, the one or more processors can receive a selection of a reset scope option (e.g., "Reset for this machine only" or "Reset for all 4WD Tractors") displayed via the parameter review and propagation interface (e.g., GUI 500f), retrieve a template layout of the default configuration from the database 424, and overwrite the second set of parameters for each target machine accordingly. In some implementations, restoring the default configuration can include removing customized fields, reapplying the default parameter order, and regenerating telemetry display logic for each affected machine (e.g., updating GUI 500g or GUI 500h). In some examples, the one or more processors can confirm that each parameter in the default configuration is supported by the respective machines before finalizing the update.

In some implementations, the interaction with the second set of parameters at step 706 can include a reordering of one or more of the second set of parameters, and the process 700 can include updating, by the one or more processors, a visual arrangement of the display of the second set of parameters in the at least one dynamic field based on the reordering. That is, the one or more processors (e.g., the data processing system 410 or customization system 420) can receive an input corresponding to a reordering gesture or command (e.g., a drag-and-drop interaction applied to a parameter tile or list item via GUI 500d or GUI 500f), determine an updated ordering of the second set of parameters, and modify a configuration object representing the dynamic layout. For example, the one or more processors can receive an input to reposition a telemetry parameter (e.g., moving engine oil pressure below engine fuel rate), apply the updated order to the configuration state associated with the at least one agricultural machine, and regenerate the GUI (e.g., GUI 500g or GUI 500h) to reflect the visual arrangement of the second set of parameters in the revised order. In some embodiments, the one or more processors can store the updated ordering in database 424 for persistence across user sessions or for propagation to additional machines.

In some embodiments, the process 700 can include generating, by the one or more processors, a machine-specific graphical representation of the at least one agricultural machine. That is, the one or more processors (e.g., the data processing system 410 or customization system 420) can retrieve or construct a visual representation of the selected agricultural machine based on one or more identifying attributes, such as machine type (e.g., 4WD tractor, sprayer, combine), model number, or configuration profile. In some embodiments, generating the machine-specific graphical representation can include selecting or generating a schematic, wire frame, or illustration that accurately reflects the physical structure, layout, and component arrangement of the machine. For example, the one or more processors can retrieve a vector graphic, interactive SVG object, or layered UI asset corresponding to the selected machine from the database 424 or from a local application package, and can dynamically modify the graphical representation to reflect machine-specific characteristics (e.g., a rear-mounted PTO, a dual-wheel configuration, a specific sensor package, etc.). In some examples, the machine-specific graphical representation can include labeled or annotated zones corresponding to systems or subsystems of the machine (e.g., drivetrain, engine compartment, hydraulic system, cooling system), which can be used to support parameter mapping or alert visualization.

In some embodiments, the process 700 can include causing, by the one or more processors, a display of the machine-specific graphical representation via the GUI. That is, the one or more processors (e.g., the data processing system 410 or customization system 420) can cause the GUI (e.g., GUI 600) to render and present the machine-specific graphical representation of the at least one agricultural machine on a client device 430. In some embodiments, causing the display can include retrieving display metadata and layout information corresponding to the machine-specific graphical representation and generating visual output that reflects the structure, profile, or geometry of the at least one agricultural machine. For example, the one or more processors can generate rendering instructions based on the machine type, machine identifier, or telematics capability profile of the agricultural machine 440, and transmit the rendering instructions to the GUI for presentation of a visual representation that reflects physical components or systems of the machine (e.g., engine, wheels, driveline, hydraulic subsystems). In some examples, the machine-specific graphical representation can include vector-based graphics, annotated diagrams, or layered display objects rendered within an interface region of the GUI, and can be dynamically resized, centered, or adapted to the screen dimensions of the client device. In some embodiments, the one or more processors can cause the machine-specific graphical representation to be displayed alongside or integrated with dynamic parameter overlays, interactive tiles, or selectable regions corresponding to telemetry data or machine status indicators.

In some embodiments, the process 700 can include rendering, by the one or more processors, each of one or more parameters from the second set of parameters at a corresponding physical location on the machine-specific graphical representation that visually corresponds to a component of the at least one agricultural machine associated with each of the one or more parameters. That is, the one or more processors (e.g., the data processing system 410 or customization system 420) can identify, for each parameter in the second set of parameters, a physical machine component (e.g., engine, hydraulic pump, transmission unit, axle assembly, braking system) associated with the parameter, and generate a visual placement of the parameter on the machine-specific graphical representation at a corresponding location. In some examples, the one or more processors can retrieve positional metadata, overlay coordinates, or machine model diagrams from the database 424 to determine where on the graphical representation to render each parameter. For example, an engine fuel rate parameter can be rendered near an engine region of the machine-specific graphical representation, while an air brake pressure parameter can be rendered adjacent to a rear axle or braking system region. In some embodiments, each rendered parameter can include a real-time telemetry value (e.g., 2.4 gal/hr for engine fuel rate), a unit of measurement, a label or icon, and/or a visual style or indicator corresponding to a parameter status (e.g., normal, warning, alert, etc.).

In some embodiments, the process 700 can include generating, by the one or more processors, for display via the GUI, a visual indicator in association with the at least one parameter of the first set of parameters or the second set of parameters, the visual indicator including a color-coded state representing whether a current value of the at least one parameter satisfies the corresponding operational threshold. That is, the one or more processors (e.g., the data processing system 410 or the alert system 422) can evaluate the current value of a parameter from the first set of parameters or the second set of parameters against a corresponding operational threshold and generate a color-coded state or visual indicator to reflect the evaluation. For example, the graphical user interface can display a red color-coded visual indicator for an engine coolant temperature parameter of the second set of parameters exceeding a threshold, a yellow color-coded visual indicator for a transmission oil temperature parameter approaching a warning limit, and a green color-coded visual indicator for a fuel level parameter of the first set of parameters remaining within a normal operating range. In some embodiments, the color-coded state or visual indicator can be presented as a border, background, icon, or badge rendered adjacent to or overlaid upon a static field corresponding to the first set of parameters or a dynamic field corresponding to the second set of parameters. In some examples, the one or more processors can continuously evaluate the current value of the at least one parameter and update the color-coded state of the visual indicator in real time or near real time based on updated telematics data received from the at least one agricultural machine.

In some embodiments, the GUI includes a mobile interface accessible via a mobile application installed on a user device, and the process 700 can include determining, by the one or more processors, the interaction with the second set of parameters corresponds to an initial interaction. That is, the one or more processors (e.g., the data processing system 410 or customization system 420) can retrieve a predefined layout of the second set of parameters based on a machine identifier, machine type, or equipment class associated with the selected agricultural machine (e.g., combine, tractor, sprayer) provided via the installed application. For example, the one or more processors can retrieve a template configuration from the database 424 identifying a default ordering of dynamic fields (e.g., engine fuel rate, engine load, engine speed) and load or install the default configuration into a layout object used to render the GUI (e.g., GUI 500g or GUI 500h). In some embodiments, loading or installing the default configuration can occur during initialization of a parameter display, after a reset operation, or in response to detecting that no prior customization state exists for the selected machine. In some examples, the one or more processors can validate that the machine supports each parameter in the default configuration and exclude unsupported fields from the display or substitute telemetry sources.

In some embodiments, the process 700 can include responsive at least in part to the initial interaction, causing, by the one or more processors, via the mobile interface, a display of an instructional interface including one or more instructional elements configured to guide customization of the second set of parameters. That is, the one or more processors (e.g., the data processing system 410 or client device 430) can detect an initial interaction with the GUI (e.g., a first-time launch of the mobile application or a selection of a customization option) and render an instructional interface (e.g., an onboarding guide) including one or more tooltips, overlays, or banners to guide an operator with regard to how to configure the second set of parameters. For example, the instructional elements of the instructional interface can guide or assist a user or operator to identify gesture controls (e.g., drag to reorder, tap to remove, select to add), explain the function of a "favorites' section, or highlight available parameter options for selection. In some examples, the instructional interface can guide the user through a step-by-step customization process and guide the user in selecting, arranging, or modifying parameters of the second set of parameters using visual indicators and contextual explanations displayed within the mobile interface. In some embodiments, the one or more processors can conditionally present the instructional interface based on a user profile, interaction history, or system configuration setting, and can further track completion of the instructional sequence to suppress repeated display (e.g., to prevent display of the instructional interface when the interaction is not determined to be an initial interaction).

In some embodiments, the process 700 can include causing, by the one or more processors, the GUI to display a first section including one or more parameters of the second set of parameters in visual proximity to the first set of parameters. That is, the one or more processors (e.g., the data processing system 410 or customization system 420) can generate or update a graphical user interface (e.g., GUI 500b, GUI 500g, or GUI 500h) to render a layout in which selected ones of the second set of parameters are visually arranged alongside the first set of parameters, such as in a combined tile view, list view, or side-by-side column arrangement. In some embodiments, displaying the first section can include organizing the second set of parameters (e.g., engine load, fuel rate, or hydraulic pressure) in a contiguous or adjacent section near the first set of parameters (e.g., ground speed, fuel level, DEF level), such that an operator can simultaneously view baseline machine conditions and actively selected custom parameters. In some examples, the visual proximity can be determined based on screen size, device orientation, or display density, and can include a scrollable region, a panel, or a unified tile grouping to maintain an association and/or contextual relevance between the parameter sets.

In some embodiments, the process 700 can include causing, by the one or more processors, the GUI to display a second section including one or more additional parameters from the second set of parameters, the second section arranged separately from the first section within the GUI. That is, the one or more processors (e.g., the data processing system 410 or customization system 420) can generate or render a distinct region of the GUI (e.g., GUI 500b, GUI 500g, or GUI 500h) for displaying one or more parameters from the second set of parameters that are not included in the first section. In some embodiments, the second section can be arranged below, a, or in a collapsible container separate from the first section, and can include parameters selected by the operator for monitoring but not designated as primary or pinned favorites (e.g., transmission oil temperature, gear selected, or work state). For example, the GUI can display a first section with a limited number of operator-prioritized parameters from the second set (e.g., engine fuel rate and air brake pressure) rendered in visual proximity to the first set of parameters, and a second section with additional parameters from the second set (e.g., hydraulic oil temperature or driveline hours) displayed in a separate scrollable container or expandable tile group. In some embodiments, the second section can be dynamically populated based on operator configuration, parameter relevance, or machine-specific layout logic and can support real-time telemetry updates, threshold tracking, or drill-down views independent of the first section. In some examples, the second section can be refreshed separately from the first section based on incoming telemetry data or configuration updates. In some embodiments, the second section can include separate layout logic, parameter selection criteria, or visual styling to visually distinguish the second section from the first section.

As utilized herein with respect to numerical ranges, the terms "approximately," "about," "substantially," and similar terms generally mean +/- 10% of the disclosed values, unless specified otherwise. As utilized herein with respect to structural features (e.g., to describe shape, size, orientation, direction, relative position, etc.), the terms "approximately," "about," "substantially," and similar terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the figures. It should be noted that the orientation of various elements may differ according to other exemplary embodiments, and that such variations are intended to be encompassed by the present disclosure.

It should be understood that the phrase "in response to," "responsive to," "responsive at least in part to," or the like, as used herein, can refer to various causal and contextual relationships between an initiating event, action, and/or condition and a subsequent action or operation. That is, the phrases "in response to," "responsive to," "responsive at least in part to," or the like can refer to actions or operations performed directly as a result of the initiating event/action or condition, indirectly in relation to the initiating event/action or condition, based on data or parameters derived from or otherwise related to the initiating event/action or condition, and/or as a portion of a sequence or process of which the initiating event serves as one of multiple inputs, factors, and/or considerations causing the subsequent action or operation.

The hardware and data processing components used to implement the various processes, operations, illustrative logics, logical blocks, modules, and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device) may include one or more devices (e.g., RAM, ROM, Flash memory, hard disk storage) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit or the processor) the one or more processes described herein.

The present disclosure contemplates methods, systems, and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the vehicle 10 and the systems and components thereof as shown in the various exemplary embodiments is illustrative only. Additionally, any element disclosed in one embodiment may be incorporated or utilized with any other embodiment disclosed herein.

## Claims

1. A system for monitoring customizable parameters of agricultural machines, the system comprising:
one or more processors configured to:
receive telematics data for at least one agricultural machine;
responsive at least in part to a selection of the at least one agricultural machine via a graphical user interface (GUI), cause a display of a first set of parameters in at least one static field of the GUI and a second set of parameters available for customization in at least one dynamic field of the GUI, the first set of parameters and the second set of parameters based at least in part on the telematics data for the at least one agricultural machine;
responsive at least in part to an interaction with the second set of parameters via the GUI, cause the GUI to update a configuration of the second set of parameters in the at least one dynamic field in accordance with the interaction; and
cause the GUI to display an alert based on at least one parameter of the first set of parameters or the second set of parameters satisfying a corresponding operational threshold.

2. The system of claim 1, wherein the first set of parameters and the second set of parameters are updated in real-time based on the telematics data for the at least one agricultural machine, and the one or more processors are further configured to:
transmit a control signal to remotely disable the at least one agricultural machine in response to the alert.

3. The system of claim 1, the one or more processors further configured to:
cause, via the GUI, a display of a prompt comprising at least one selectable element for applying the configuration of the second set of parameters to respective second sets of parameters of a plurality of agricultural machines having a machine type that matches a machine type of the at least one agricultural machine, wherein the configuration is based on the interaction with the second set of parameters; and
responsive at least in part to receiving a selection of the at least one selectable element, update the respective second sets of parameters for one or more of the plurality of agricultural machines based on the configuration.

4. The system of claim 1, the one or more processors further configured to:
responsive at least in part to receiving a request to reset the second set of parameters, restore a default configuration of the second set of parameters based on a machine type of the at least one agricultural machine.

5. The system of claim 4, wherein the default configuration is restored for at least one of:
the at least one agricultural machine selected via the GUI, or
a plurality of agricultural machines having a machine type that matches the machine type of the at least one agricultural machine.

6. The system of claim 1, wherein the interaction with the second set of parameters comprises a reordering of one or more of the second set of parameters, and the one or more processors further configured to:
update a visual arrangement of the display of the second set of parameters in the at least one dynamic field based on the reordering.

7. The system of claim 1, the one or more processors further configured to:
generate a machine-specific graphical representation of the at least one agricultural machine;
cause a display of the machine-specific graphical representation via the GUI; and
render each of one or more parameters from the second set of parameters at a corresponding physical location on the machine-specific graphical representation that visually corresponds to a component of the at least one agricultural machine associated with each of the one or more parameters.

8. The system of claim 1, the one or more processors further configured to:
generate, for display via the GUI, a visual indicator in association with the at least one parameter of the first set of parameters or the second set of parameters, the visual indicator comprising a color-coded state representing whether a current value of the at least one parameter satisfies the corresponding operational threshold.

9. The system of claim 1, wherein the GUI comprises a mobile interface accessible via a mobile application installed on a user device, and the one or more processors further configured to:
load a default configuration of the second set of parameters for the at least one agricultural machine;
determine the interaction with the second set of parameters corresponds to an initial interaction; and
responsive at least in part to the initial interaction, cause, via the mobile interface, a display of an instructional interface comprising one or more instructional elements configured to guide customization of the second set of parameters.

10. The system of claim 1, the one or more processors further configured to:
cause the GUI to display a first section comprising one or more parameters of the second set of parameters in visual proximity to the first set of parameters; and
cause the GUI to display a second section comprising one or more additional parameters from the second set of parameters, the second section arranged separately from the first section within the GUI.

11. A computer-implemented method comprising:
receiving, by one or more processors, telematics data for at least one agricultural machine;
responsive at least in part to a selection of the at least one agricultural machine via a graphical user interface (GUI), causing, by the one or more processors, a display of a first set of parameters in at least one static field of the GUI and a second set of parameters available for customization in at least one dynamic field of the GUI, the first set of parameters and the second set of parameters based at least in part on the telematics data for the at least one agricultural machine;
responsive at least in part to an interaction with the second set of parameters via the GUI, causing, by the one or more processors, the GUI to update a configuration of the second set of parameters in the at least one dynamic field in accordance with the interaction; and
causing, by the one or more processors, the GUI to display an alert based on at least one parameter of the first set of parameters or the second set of parameters satisfying a corresponding operational threshold.

12. The computer-implemented method of claim 11, wherein the first set of parameters and the second set of parameters are updated in real-time based on the telematics data for the at least one agricultural machine, and the method further comprising:
transmitting, by the one or more processors, a control signal to remotely disable the at least one agricultural machine in response to the alert.

13. The computer-implemented method of claim 11, further comprising:
causing, by the one or more processors, via the GUI, a display of a prompt comprising at least one selectable element for applying the configuration of the second set of parameters to respective second sets of parameters of a plurality of agricultural machines having a machine type that matches a machine type of the at least one agricultural machine, wherein the configuration is based on the interaction with the second set of parameters; and
responsive at least in part to receiving a selection of the at least one selectable element, updating, by the one or more processors, the respective second sets of parameters for one or more of the plurality of agricultural machines based on the configuration.

14. The computer-implemented method of claim 11, further comprising:
responsive at least in part to receiving a request to reset the second set of parameters, restoring, by the one or more processors, a default configuration of the second set of parameters based on a machine type of the at least one agricultural machine.

15. The computer-implemented method of claim 14, wherein the default configuration is restored for at least one of:
the at least one agricultural machine selected via the GUI, or
a plurality of agricultural machines having a machine type that matches the machine type of the at least one agricultural machine.

16. The computer-implemented method of claim 11, wherein the interaction with the second set of parameters comprises a reordering of one or more of the second set of parameters, and the method further comprising:
updating, by the one or more processors, a visual arrangement of the display of the second set of parameters in the at least one dynamic field based on the reordering.

17. The computer-implemented method of claim 11, further comprising:
generating, by the one or more processors, a machine-specific graphical representation of the at least one agricultural machine;
causing, by the one or more processors, a display of the machine-specific graphical representation via the GUI; and
rendering, by the one or more processors, each of one or more parameters from the second set of parameters at a corresponding physical location on the machine-specific graphical representation that visually corresponds to a component of the at least one agricultural machine associated with each of the one or more parameters.

18. The computer-implemented method of claim 11, further comprising:
generating, by the one or more processors, for display via the GUI, a visual indicator in association with the at least one parameter of the first set of parameters or the second set of parameters, the visual indicator comprising a color-coded state representing whether a current value of the at least one parameter satisfies the corresponding operational threshold.

19. The computer-implemented method of claim 11, wherein the GUI comprises a mobile interface accessible via a mobile application installed on a user device, and the method further comprising:
loading, by the one or more processors, a default configuration of the second set of parameters for the at least one agricultural machine;
determining, by the one or more processors, the interaction with the second set of parameters corresponds to an initial interaction; and
responsive at least in part to the initial interaction, causing, by the one or more processors, via the mobile interface, a display of an instructional interface comprising one or more instructional elements configured to guide customization of the second set of parameters.

20. A non-transitory computer-readable storage media (CRM) for monitoring customizable parameters of agricultural machines, the non-transitory CRM having instructions stored thereon and executable by one or more processors to:
receive telematics data for at least one agricultural machine;
responsive at least in part to a selection of the at least one agricultural machine via a graphical user interface (GUI), cause a display of a first set of parameters in at least one static field of the GUI and a second set of parameters available for customization in at least one dynamic field of the GUI, the first set of parameters and the second set of parameters based at least in part on the telematics data for the at least one agricultural machine;
responsive at least in part to an interaction with the second set of parameters via the GUI, cause the GUI to update a configuration of the second set of parameters in the at least one dynamic field in accordance with the interaction; and
cause the GUI to display an alert based on at least one parameter of the first set of parameters or the second set of parameters satisfying a corresponding operational threshold.
